# EUROPEAN PATENT APPLICATION

(11) **EP 4 375 694 A1**
(43) Date of publication of application: **29.05.2024**
(21) Application number: 22845344.5
(22) Date of filing: 20.07.2022
(51) Int. Cl.: G01S 5/02

(54) **COMMUNICATION SENSING METHOD, APPARATUS AND DEVICE**

(30) Priority: 23.07.2021 CN 202110838222
(71) Applicant: Vivo Mobile Communication Co., Ltd., Dongguan, Guangdong 523863 (CN)
(72) Inventor: YAO, Jian, Dongguan, Guangdong 523863 (CN); JIANG, Dajie, Dongguan, Guangdong 523863 (CN); PAN, Xiang, Dongguan, Guangdong 523863 (CN); SI, Ye, Dongguan, Guangdong 523863 (CN); QIN, Fei, Dongguan, Guangdong 523863 (CN); YUAN, Yannan, Dongguan, Guangdong 523863 (CN)
(74) Representative: Lavoix
(86) International application number: PCT/CN2022/106725
(87) International publication number: WO 2023/001179

(57) **Abstract**

This application discloses a communication sensing method and apparatus, and a device. The communication sensing method in embodiments of this application includes: obtaining, by a first terminal, a sensing signal sent by a second terminal; and obtaining, by the first terminal, a measurement result corresponding to a first measurement quantity according to the sensing signal, where the first measurement quantity is a measurement quantity related to the sensing signal.

## Description

### CROSS-REFERENCE TO RELATED APPLICATIONS

This application claims priority to Chinese Patent Application No. 202110838222.0, filed in China on July 23, 2021, which is incorporated herein by reference in its entirety.

### TECHNICAL FIELD

This application relates to the field of communication technologies, and in particular, to a communication sensing method and apparatus, and a device.

### BACKGROUND

In addition to a communication capability, a mobile communication system in the further will have a sensing capability. The sensing capability means that one or more devices with the sensing capability can sense information such as a direction, a distance, and a speed of a target object by sending and receiving a wireless signal, or detect, track, identify, and image a target object, a target event, a target environment, or the like. In the future, with the deployment of small base stations with high-band and large-bandwidth capabilities, such as millimeter waves and terahertz in a 6th generation mobile communication technology (6th Generation Mobile Communication Technology, 6G) network, a resolution of sensing is significantly improved compared with a centimeter wave, so that the 6G network can provide a more precise sensing service. However, in the related technology, there is no related scheme on how to perform communication sensing through reception and transmission of a sensing signal by a terminal.

### SUMMARY

Embodiments of this application provide a communication sensing method and apparatus, and a device, to resolve a problem of how to perform communication sensing through reception and transmission of a sensing signal by a terminal.

According to a first aspect, a communication sensing method is provided, including:
obtaining, by a first terminal, a sensing signal sent by a second terminal; and
obtaining, by the first terminal, a measurement result corresponding to a first measurement quantity according to the sensing signal, where the first measurement quantity is a measurement quantity related to the sensing signal.

According to a second aspect, a communication sensing method is provided, including:
sending, by a second terminal, a sensing signal to a first terminal.

According to a third aspect, a communication sensing method is provided, including:
sending, by a first network device, first indication information to a first terminal and/or a second terminal, where the first indication information is used to instruct the second terminal to send a sensing signal; and/or the first indication information is used to instruct the first terminal to receive a sensing signal, and obtain a measurement result corresponding to a first measurement quantity according to the sensing signal, where the first measurement quantity is a measurement quantity related to the sensing signal, and a target terminal includes at least one terminal.

According to a fourth aspect, a communication sensing method is provided, including:
receiving, by a second network device, first indication information, where the first indication information is used to instruct a second terminal to send a sensing signal; and/or the first indication information is used to instruct a first terminal to receive a sensing signal, and obtain a measurement result corresponding to a first measurement quantity according to the sensing signal, where the first measurement quantity is a measurement quantity related to the sensing signal.

According to a fifth aspect, a communication sensing apparatus is provided, including:
a first obtaining module, configured to obtain a sensing signal sent by a second terminal; and
a second obtaining module, configured to obtain a measurement result corresponding to a first measurement quantity according to the sensing signal, where the first measurement quantity is a measurement quantity related to the sensing signal.

According to a sixth aspect, a communication sensing apparatus is provided, including:
a first sending module, configured to send a sensing signal to a first terminal.

According to a seventh aspect, a communication sensing apparatus is provided, including:
a second sending module, configured to send first indication information to a first terminal and/or a second terminal, where the first indication information is used to instruct the second terminal to send a sensing signal; and/or the first indication information is used to instruct the first terminal to receive a sensing signal, and obtain a measurement result corresponding to a first measurement quantity according to the sensing signal, where the first measurement quantity is a measurement quantity related to the sensing signal, and a target terminal includes at least one terminal.

According to an eighth aspect, a communication sensing apparatus is provided, including:
a first receiving module, configured to receive first indication information, where the first indication information is used to instruct a second terminal to send a sensing signal; and/or the first indication information is used to instruct a first terminal to receive a sensing signal, and obtain a measurement result corresponding to a first measurement quantity according to the sensing signal, where the first measurement quantity is a measurement quantity related to the sensing signal.

According to a ninth aspect, a terminal is provided. The terminal includes a processor, a memory, and a program or an instruction that is stored in the memory and that can be run on the processor, and the program or the instruction is executed by the processor to implement the steps of the method according to the first aspect or the second aspect.

According to a tenth aspect, a terminal is provided, including a processor and a communication interface. The communication interface is configured to obtain a measurement result corresponding to a first measurement quantity according to the sensing signal, where the first measurement quantity is a measurement quantity related to the sensing signal; or the communication interface is configured to send a sensing signal to a first terminal.

According to an eleventh aspect, a network device is provided. The network side device includes a processor, a memory, and a program or an instruction that is stored in the memory and that can be run on the processor, and the program or the instruction is executed by the processor to implement the steps of the method according to the third aspect or the fourth aspect.

According to a twelfth aspect, a network device is provided, including a processor and a communication interface. The communication interface is configured to send first indication information to a first terminal and/or a second terminal, where the first indication information is used to instruct the second terminal to send a sensing signal; and/or the first indication information is used to instruct the first terminal to receive a sensing signal, and obtain a measurement result corresponding to a first measurement quantity according to the sensing signal, where the first measurement quantity is a measurement quantity related to the sensing signal, and a target terminal includes at least one terminal; or the communication interface is configured to receive first indication information, where the first indication information is used to instruct a second terminal to send a sensing signal; and/or the first indication information is used to instruct a first terminal to receive a sensing signal, and obtain a measurement result corresponding to a first measurement quantity according to the sensing signal, where the first measurement quantity is a measurement quantity related to the sensing signal.

According to a thirteenth aspect, a readable storage medium is provided. The readable storage medium stores a program or an instruction, and the program or the instruction is executed by a processor to implement the steps of the method according to the first aspect, or the steps of the method according to the second aspect, or the steps of the method according to the third aspect, or the steps of the method according to the fourth aspect.

According to a fourteenth aspect, a chip is provided. The chip includes a processor and a communication interface, the communication interface is coupled to the processor, and the processor is configured to run a program or an instruction to implement the method according to the first aspect, or the method according to the second aspect, or the method according to the third aspect, or the method according to the fourth aspect.

According to a fifteenth aspect, a computer program product is provided. The computer program product is stored in a non-transient storage medium, and the computer program product is executed by at least one processor to implement the steps of the method according to the first aspect, the second aspect, the third aspect, or the fourth aspect.

In the embodiments of this application, a first terminal obtains a sensing signal sent by a second terminal, and the first terminal obtains a measurement result corresponding to a first measurement quantity according to the sensing signal, where the first measurement quantity is a measurement quantity related to the sensing signal. In this way, communication sensing is implemented through reception and transmission of a sensing signal by a terminal.

### BRIEF DESCRIPTION OF DRAWINGS

FIG. 1 is a first schematic flowchart of a communication sensing method according to an embodiment of this application;
FIG. 2 is a second schematic flowchart of a communication sensing method according to an embodiment of this application;
FIG. 3 is a third schematic flowchart of a communication sensing method according to an embodiment of this application;
FIG. 4 is a fourth schematic flowchart of a communication sensing method according to an embodiment of this application;
FIG. 5 is a first schematic diagram of modules of a communication sensing apparatus according to an embodiment of this application;
FIG. 6 is a second schematic diagram of modules of a communication sensing apparatus according to an embodiment of this application;
FIG. 7 is a structural block diagram of a communication device according to an embodiment of this application;
FIG. 8 is a structural block diagram of a terminal according to an embodiment of this application;
FIG. 9 is a third schematic diagram of modules of a communication sensing apparatus according to an embodiment of this application;
FIG. 10 is a fourth schematic diagram of modules of a communication sensing apparatus according to an embodiment of this application;
FIG. 11 is a structural block diagram of a first network device according to an embodiment of this application; and
FIG. 12 is a structural block diagram of a second network device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill based on the embodiments of this application shall fall within the protection scope of this application.

In the specification and claims of this application, the terms "first", "second", and the like are intended to distinguish between similar objects but do not describe a specific order or sequence. It should be understood that the terms used in such a way are interchangeable in proper circumstances so that the embodiments of this application can be implemented in orders other than the order illustrated or described herein. Objects classified by "first" and "second" are usually of a same type, and the number of objects is not limited. For example, there may be one or more first objects. In addition, in the specification and claims, "and/or" represents at least one of connected objects, and a character "/" generally represents an "or" relationship between associated objects.

It should be noted that technologies described in the embodiments of this application are not limited to a Long Time Evolution (Long Time Evolution, LTE)/LTE-Advanced (LTE-Advanced, LTE-A) system, and may further be applied to other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), single-carrier frequency division multiple access (Single-carrier Frequency-Division Multiple Access, SC-FD-MA), and other systems. The terms "system" and "network" in the embodiments of this application may be used interchangeably. The technologies described can be applied to both the systems and the radio technologies mentioned above as well as to other systems and radio technologies. The following describes a New Radio (New Radio, NR) system for example purposes, and NR terms are used in most of the following descriptions. These technologies can also be applied to applications other than an NR system application, such as a 6th generation (6th Generation, 6G) communication system.

To enable a person skilled in the art to better understand the embodiments of this application, the following descriptions are first provided.

In addition to a communication capability, a mobile communication system in the future, for example, a Beyond 5th Generation (Beyond 5th Generation, B5G) system or a 6G system, will have a sensing capability. The sensing capability means that one or more devices with the sensing capability can sense information such as a direction, a distance, and a speed of a target object by sending and receiving a wireless signal, or detect, track, identify, and image a target object, a target event, a target environment, or the like. In the future, with the deployment of small base stations with high-band and large-bandwidth capabilities, such as millimeter waves and terahertz in a 6G network, a resolution of sensing is significantly improved compared with a centimeter wave, so that the 6G network can provide a more precise sensing service.

Integration of communication and radar is a typical fusion application of communication sensing. In the past, a radar system and a communication system were strictly distinguished due to different research objects and focus, and in most scenes, the two systems were separately studied. In fact, as typical ways of information sending, obtaining, processing, and exchange, both the radar and the communication system have many similarities in working principles, system architectures, and bands. The design of the integration of communication and radar is highly feasible and is mainly reflected in the following aspects: Firstly, both the communication system and the sensing system perform information obtaining and transmission based on an electromagnetic wave theory through emission and reception of an electromagnetic wave. Secondly, both the communication system and the sensing system have antennas, transmit sends, receive ends, signal processors, and other structures, and there is a large overlap in hardware resources. With the development of technology, there is also an increasing overlap between the two in working bands. In addition, there are similarities in key technologies such as signal modulation, reception detection, and waveform design. The integration of the communication and radar systems can bring many advantages, such as cost savings, size reduction, power consumption reduction, improvement of spectrum efficiency, and reduction of mutual interference, thereby enhancing overall performance of the system.

Sensing may be based on a single-station mode, that is, a transmit-receive co-location mode. A transmit end sends a sensing signal and then receives an echo signal for analysis to extract a sensing parameter. For example, a base station acts as both a transmit end and a receive end of the sensing signal, and a terminal or another object acts as a sensing target. Alternatively, sensing may be based on a dual-station/multi-station mode, that is, a transmit-receive non-co-location mode. A transmit end sends a sensing signal, and another receive end receives and analyzes the sensing signal to extract a sensing parameter. For example, a base station 1 acts as a transmit end of the sensing signal, and a terminal or a base station 2 acts as a receive end of the sensing signal. Similarly, A transmit end for sensing in the single or multi-station mode may also be a terminal. However, a procedure of performing communication sensing through a same terminal in is not yet clear in the related art.

With reference to the accompanying drawings, the following describes in detail a communication sensing method provided in the embodiments of this application by using some embodiments and application scenes thereof.

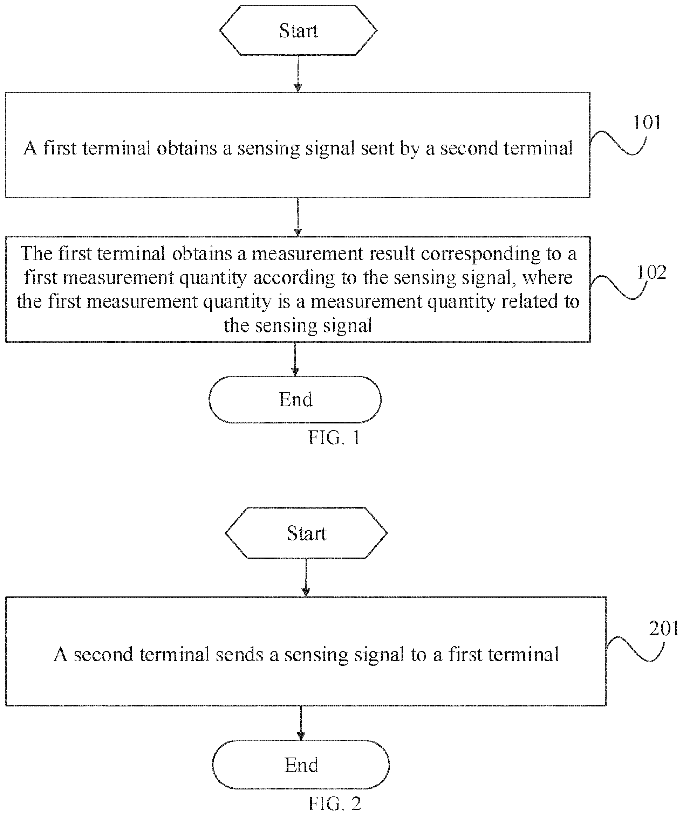

As shown in FIG. 1, an embodiment of this application provides a communication sensing method, including:
Step 101: A first terminal obtains a sensing signal sent by a second terminal.

In this step, the sensing signal may be specifically a signal used to obtain information such as a direction, a distance, and a speed of a target object, or a signal used to detect, track, identify, and image a target object, a target event, or a target environment.

Step 102: The first terminal obtains a measurement result corresponding to a first measurement quantity according to the sensing signal, where the first measurement quantity is a measurement quantity related to the sensing signal.

Optionally, the first measurement quantity includes at least one of the following:
a channel matrix H;
a received signal strength indicator (Received Signal Strength Indicator, RSSI);
a reference signal received power (Reference Signal Received Power, RSRP);
channel state information (Channel State Information, CSI);
a power, a delay, and/or angle information of each path in a multipath channel;

Doppler spread;
a Doppler frequency shift;
a phase difference between a first antenna and a second antenna;
a delay difference between the first antenna and the second antenna;
a characteristic difference between an inphase signal and a quadrature signal, for example, a phase difference or an amplitude difference between the inphase signal and the quadrature signal; and
angle-related information.

In this embodiment of this application, a first terminal obtains a sensing signal sent by a second terminal, and the first terminal obtains a measurement result corresponding to a first measurement quantity according to the sensing signal, where the first measurement quantity is a measurement quantity related to the sensing signal. In this way, communication sensing is implemented through reception and transmission of a sensing signal by a terminal.

Optionally, the obtaining, by a first terminal, a sensing signal sent by a second terminal includes:
determining configuration information of the sensing signal; and
obtaining the sensing signal according to the configuration information of the sensing signal.

Optionally, the configuration information of the sensing signal includes at least one of the following:
a waveform of the sensing signal, such as OFDM, single-carrier frequency division multiple access (Single-carrier Frequency-Division Multiple Access, SC-FDMA), Orthogonal Time Frequency Space (Orthogonal Time Frequency Space, OTFS), Frequency Modulated Continuous Wave (Frequency Modulated Continuous Wave, FMCW), and a pulse signal;
a subcarrier spacing of the sensing signal, for example, a subcarrier spacing 30 KHZ of an OFDM system;
a guard interval of the sensing signal, that is, a time interval between a moment at which a signal whose sending ends and a moment at which a latest echo signal of the signal is received, where the parameter is proportional to a maximum sensing distance and may be obtained by means of calculation by using 2dmax/c, where dmax is the maximum sensing distance, for example, for a self-transmitting and self-receiving sensing signal, dmax represents a maximum distance from a receive point of the sensing signal to a transmit point of the signal; and in some cases, a cyclic prefix CP of an OFDM signal may serve as a minimum guard interval; and c is a speed of light;
a bandwidth of the sensing signal, where the parameter is inversely proportional to a distance resolution and may be obtained by using c/(2*delta_d), where delta_d is the distance resolution (which belongs to a sensing requirement);
burst duration of the sensing signal, where the parameter is inversely proportional to a rate resolution (which belongs to a sensing requirement), and the parameter is a time span of the sensing signal and is mainly used to calculate a Doppler frequency shift; and the parameter may be calculated using c/(2*delta_v*fc), where delta_v is a speed resolution, and fc is a center frequency of the signal;
a time domain interval of the sensing signal, where the parameter may be obtained by means of calculation by using c/(2*fc*v_range), where v_range is a maximum rate minus a minimum speed (which belongs to a sensing requirement), the parameter is a time interval between two adjacent sensing signals, and fc is a carrier frequency of the signal;
a transmit signal power of the sensing signal, for example, a value is taken every 2 dBm from -20 dBm to 23 dBm;
a signal format of the sensing signal, for example, information such as a sounding reference signal (Sounding Reference Signal, SRS), a demodulation reference signal (Demodulation Reference Signal, DMRS), a positioning reference signal (Positioning Reference Signal, PRS), or another predefined signal and a related sequence format;
a signal direction of the sensing signal, for example, a direction of the sensing signal or beam information;
a time resource of the sensing signal, for example, a slot index or a symbol index of a slot in which the sensing signal is located, where there are two types of time resources: a one-off time resource, for example, an omnidirectional first signal is sent on one symbol; and a non-one-off time resource, for example, in a plurality of groups of periodic time resources or discontinuous time resources (which may include a start time and an end time), target signals in a same direction are sent on each group of periodic time resources, and beam directions of periodic time resources in different groups are different;
a frequency resource of the sensing signal, including a center frequency, a bandwidth, an RB, and/or a subcarrier of the target signal; and
a quasi-co-location (Quasi-Co-Location, QCL) relationship of the sensing signal, for example, the target signal includes a plurality of resources and each resource corresponds to one synchronization signal and physical broadcast channel block (Synchronization Signal and PBCH block, SSB) QCL, where the QCL includes Type A, B, C, or D.

Optionally, the determining configuration information of the sensing signal includes:
receiving at least one of first indication information sent by a first network device, second indication information sent by a second network device, and third indication information sent by the second terminal; and
determining the configuration information of the sensing signal according to at least one of the first indication information, the second indication information, and the third indication information, where
the first indication information includes at least one of a sensing requirement, first configuration information of the sensing signal, capability information of the first network device, and recommendation configuration information of the first network device;
the second indication information includes at least one of a sensing requirement, second configuration information of the sensing signal, capability information of the second network device, and recommendation configuration information of the second network device; and
the third indication information includes at least one of a sensing requirement, third configuration information of the sensing signal, capability information of the second terminal, and recommendation configuration information of the second terminal.

Herein, the first configuration information is configuration information that is of the sensing signal and that is determined by the first network device, and the first configuration information may include all configuration information of the sensing signal or some configuration information of the sensing signal; the second configuration information is configuration information that is of the sensing signal and that is determined by the second network device, and the second configuration information may include all configuration information of the sensing signal or some configuration information of the sensing signal; and the third configuration information is configuration information that is of the sensing signal and that is determined by the second terminal, and the third configuration information may include all configuration information of the sensing signal or some configuration information of the sensing signal.

It should be noted that the sensing requirement in this embodiment of this application includes at least one of a sensing result and a sensing indicator.

The sensing result includes at least one of the following:
characteristic information of a target object: existence, a distance, a location, a speed, an acceleration, a material, a shape, a type, a radar cross section RCS, a polarization scattering characteristic, and the like of the target object;
information about a target event: fall detection, intrusion detection, quantity statistics, indoor positioning, gesture recognition, lip reading recognition, gait recognition, expression recognition, respiration monitoring, heart rate monitoring, and the like; and
information about a target environment: humidity, brightness, temperature, atmospheric pressure, air quality, a weather condition, a terrain, construction/vegetation distribution, population statistics, a population density, a vehicle density, and the like.

The sensing indicator includes at least one of the following:
sensing accuracy, including a distance resolution or an imaging resolution or a moving speed resolution or an angle resolution;
a sensing error, including a distance error or an imaging error or a moving speed error;
a sensing range;
a sensing delay;
a detection probability; and
a false alarm probability.

In this embodiment of this application, the first network device may be a core network device, and specifically, may include an access and mobility management function (Access and Mobility Function, AMF) entity or a sensing function entity. For example, the first network device is a sensing network function or a sensing network element. The second network device may be specifically a base station.

The sensing network function or the sensing network element of the core network meets at least one of the following:
managing overall coordination and scheduling of resources required for sensing, such as sensing resources of a base station and/or UE;
calculating a sensing result and estimating sensing accuracy;
verifying a sensing result and estimating sensing accuracy;
supporting an immediate sensing request;
supporting a delay sensing request;
supporting a periodic or event-triggered sensing request;
supporting cancellation of a periodic or triggering sensing behavior;
corresponding to at least one AMF entity, where after receiving a sensing requirement, the AMF may select one or more sensing network functions or sensing network elements, and factors considered during the selection include at least: requested quality of service (Quality of Service, QoS) (such as sensing accuracy, a response time, and a sensing QoS level), an access type (3GPP access or non-3GPP access), an access network (Access Network, AN) type (such as 5G NR or eLTE) of the target UE, a serving AN node (such as a gNodeB or an NG-eNodeB), residential access network (Residential Access Network, RAN) configuration information, a sensing network function/sensing network element capability, a sensing network function or a sensing network element load, a sensing network function or a sensing network element location, a single event reporting or multi-event reporting indication, event reporting duration, and network slice information;
determining a sensing method according to at least one of a type of a sensing client, sensing QoS, a sensing capability of a terminal, and a sensing capability of a network device, where the sensing method includes at least one of the following: sending, by the first network node, the sensing signal, and receiving, by the second network node, the sensing signal; sending and receiving, by the first network node, the sensing signal; sending, by the first network node, the sensing signal, and receiving, by a terminal device associated with the first network node, the sensing signal; sending, by the terminal device, the sensing signal, and receiving, by the second terminal, the sensing signal; sending and receiving, by the terminal device, the sensing signal; and sending, by the terminal device, the sensing signal, and receiving, by the first network node, the sensing signal; and
being located on a core network side or an access network side, where if the sensing network function/sensing network element is on a base station side, compared with being located on the core network, all processes of the sensing service may be completed in a RAN (for a case that the base station triggers the sensing service, or the UE triggers the sensing service).

The first network node and the second network node may be specifically a base station.

Optionally, the sensing network function or the sensing network element of the core network further has at least one of the following characteristics:
interacting with target UE, a serving base station of the target UE, or a base station associated with a target area for target information (the target information includes a processing sensing request, an interaction sensing capability, interaction sensing auxiliary data, an interaction sensing measurement quantity, or a sensing result), to obtain a target sensing result or a sensing measurement quantity (an uplink measurement quantity or a downlink measurement quantity);
the sensing network function or the sensing network element directly interacts with an application server (for example, an application server of an operator) for a sensing request and a sensing result; or the sensing network function or the sensing network element interacts with an AMF for a sensing request and a sensing result, and the AMF may directly or indirectly interact with an application server (for example, a third-party application server) for the sensing request and the sensing result (by using a gateway mobile location center (Gateway Mobile Location Center, GMI,C) and a network exposure function (Network Exposure Function, NEF)); and
the sensing network function or the sensing network element may be a new network element, or an existing network function/network element such as a location management function (Location Management Function, LMF), with an added new sensing-related function.

Optionally, the configuration information of the sensing signal includes at least one of the following:
first configuration information, where the first configuration information is configuration information that is of the sensing signal and that is determined by the first network device;
second configuration information, where the second configuration information is configuration information that is of the sensing signal and that is determined by the second network device;
third configuration information, where the third configuration information is configuration information that is of the sensing signal and that is determined by the second terminal; and
fourth configuration information, where the fourth configuration information is configuration information that is of the sensing signal and that is determined by the first terminal.

Optionally, the first terminal determines the fourth configuration information by using at least one of the following:
the sensing requirement;
the capability information of the first network device;
the capability information of the second network device;
the recommendation configuration information of the first network device;
the recommendation configuration information of the second network device;
the capability information of the second terminal; and
the recommendation configuration information of the second terminal.

In this embodiment of this application, the configuration information of the sensing signal includes at least one of the following manners:

The configuration is determined by one of the first network device, the second network device, and the UE. Optionally, the other two parties may send a capability or recommend a configuration to a determining party.

The configuration is determined by at least two of the first network device, the second network device, and the UE. For example, the first network device determines five of ten parameters, and the UE determines the other five parameters. Optionally, determining parties may report a capability or recommend a configuration, and a non-determining party may also report a capability or recommend a configuration to the determining party. For example, if the first network device and the UE determine the configuration together, the first network device and the UE may notify each other of the capability or recommend the configuration, and the second network device may also send the capability or recommend the configuration to at least one of the first network device and the UE.

The configuration information of the sensing signal is agreed upon in advance and is associated with the sensing requirement (a mapping table between the sensing requirement and the related configuration of the sensing signal is established in advance). For example, after receiving the sensing requirement sent by the first network device, the first terminal independently selects the corresponding configuration information of the sensing signal.

The UE includes at least one of the first terminal and the second terminal. The second network device (base station) may be at least one of a connected base station of the first terminal and a connected base station of the second terminal, and the connected base station of the first terminal and the connected base station of the second terminal may be the same or different.

Optionally, after the receiving at least one of first indication information sent by a first network device, second indication information sent by a second network device, and third indication information sent by the second terminal, the method further includes:
sending first sensing requirement response information to at least one of the first network device, the second network device, and the second terminal in a case that it is determined, according to at least one of the first indication information, the second indication information, and the third indication information, to participate in a sensing service, where the first sensing requirement response information is used to indicate that the first terminal agrees to participate in a sensing service; or
sending second sensing requirement response information to at least one of the first network device, the second network device, and the second terminal in a case that it is determined, according to at least one of the first indication information, the second indication information, and the third indication information, not to participate in a sensing service, where the second sensing requirement response information is used to indicate that the first terminal refuses to participate in a sensing service.

In a specific embodiment of this application, the first terminal may agree to or refuse to participate in a sensing service. A specific method includes at least one of the following:
Method 1: After the first network device sends the sensing requirement to the UE, the UE agrees to or refuses to participate, and UE that participates in the sensing service is selected from UE that agrees to provide the sensing requirement.
Method 2: After selecting UE that participates in the sensing service, the first network device or the second network device sends the sensing requirement to the associated UE, and the UE agrees or refuses to participate.
Method 3: Whether the UE can participate in the sensing service is agreed upon in advance, and is stored in a storage node related to a core network, for example, a UDR. After receiving the sensing requirement and selecting UE that participates in the sensing service, the first network device accesses the storage node that stores whether the associated UE can participate in the related sensing service, and obtains information about whether the UE can participate in the related sensing service.

Optionally, the method in this embodiment of this application further includes:
obtaining, by the first terminal, the first measurement quantity sent by a first network device, a second network device, or the second terminal; or
determining the first measurement quantity according to a sensing requirement.

In an optional implementation, after the obtaining a measurement result corresponding to a first measurement quantity according to the sensing signal, the method further includes:
sending, by the first terminal, the measurement result to a first network device, a second network device, or the second terminal.

Herein, the measurement result is sent to the first network device, the second network device, or the second terminal, and the first network device, the second network device, or the second terminal determines the corresponding sensing result.

In a second optional implementation, after the obtaining a measurement result corresponding to a first measurement quantity according to the sensing signal, the method further includes:
determining, by the first terminal, a sensing result according to the measurement result; and
sending the sensing result to a first network device, a second network device, or the second terminal.

In this implementation, the first terminal determines the sensing result according to the measurement result, and sends the sensing result to the first network device, the second network device, or the second terminal.

In a third optional implementation, before the obtaining, by a first terminal, a sensing signal sent by a second terminal, the method further includes:
sending fourth indication information to a first network device, a second network device, or the second terminal, where the fourth indication information includes at least one of a sensing requirement, fourth configuration information of the sensing signal, capability information of the first terminal, and recommendation configuration information of the first terminal.

After the obtaining, by the first terminal, a measurement result corresponding to a first measurement quantity according to the sensing signal, the method further includes:
obtaining a target sensing result fed back by the first network device, the second network device, or the second terminal according to the fourth indication information, where
the target sensing result includes a sensing result obtained according to at least one measurement result of the first terminal.

In this implementation, the first terminal may initiate the sensing service, and the first terminal sends the fourth indication information to the first network device, the second terminal, or the second network device, and obtains the corresponding target sensing result.

Optionally, the sensing result includes at least one of the following:
characteristic information of a target object;
information about a target event; and
information about a target environment.

In this embodiment of this application, the characteristic information of the target object is understood as information that can reflect an attribute or a status of the target object, and may be at least one of the following: a location of the target object, a speed of the target object, an acceleration of the target object, a material of the target object, a shape of the target object, a type of the target object, a radar cross section (Radar Cross Section, RCS) of the target object, and the like.

The information about the target event may be understood as information related to the target event, that is, information that can be detected/sensed when the target event occurs, and may be fall detection, intrusion detection, quantity statistics, indoor positioning, gesture recognition, lip reading recognition, gait recognition, expression recognition, respiration monitoring, heart rate monitoring, or the like.

The information about the target environment may be at least one of the following: humidity, brightness, temperature, atmospheric pressure, air quality, a weather condition, a terrain, construction/vegetation distribution, population statistics, a population density, a vehicle density, and the like.

It should be noted that, in this embodiment of this application, the sensing result may be directly obtained based on the first measurement quantity, or the first measurement quantity may be further processed by means of calculation, to be converted into an expected sensing result.

In this embodiment of this application, a first terminal obtains a sensing signal sent by a second terminal, and the first terminal obtains a measurement result corresponding to a first measurement quantity according to the sensing signal, where the first measurement quantity is a measurement quantity related to the sensing signal. In this way, communication sensing is implemented through reception and transmission of a sensing signal by a terminal.

As shown in FIG. 2, an embodiment of this application further provides a communication sensing method, including:
Step 201: A second terminal sends a sensing signal to a first terminal.

In this step, the sensing signal may be specifically a signal used to obtain information such as a direction, a distance, and a speed of a target object, or a signal used to detect, track, identify, and image a target object, a target event, or a target environment.

Herein, a second terminal sends a sensing signal to a first terminal, so that the first terminal obtains a measurement result corresponding to a first measurement quantity according to the sensing signal, where the first measurement quantity is a measurement quantity related to the sensing signal. In this way, communication sensing is implemented through reception and transmission of a sensing signal by a terminal.

Optionally, the first measurement quantity includes at least one of the following:
a channel matrix H;
a received signal strength indicator (Received Signal Strength Indication, RSSI);
a reference signal received power (Reference Signal Received Power, RSRP);
channel state information (Channel State Information, CSI);
a power, a delay, and/or angle information of each path in a multipath channel;

Doppler spread;
a Doppler frequency shift;
a phase difference between a first antenna and a second antenna;
a delay difference between the first antenna and the second antenna;
a characteristic difference between an inphase signal and a quadrature signal, for example, a phase difference or an amplitude difference between the inphase signal and the quadrature signal; and
angle-related information.

Optionally, the sending, by a second terminal, a sensing signal to a first terminal includes:
determining configuration information of the sensing signal; and
sending the sensing signal according to the configuration information of the sensing signal.

Optionally, the configuration information of the sensing signal includes at least one of the following:
a waveform of the sensing signal, such as OFDM, single-carrier frequency division multiple access (Single-carrier Frequency-Division Multiple Access, SC-FDMA), Orthogonal Time Frequency Space (Orthogonal Time Frequency Space, OTFS), Frequency Modulated Continuous Wave (Frequency Modulated Continuous Wave, FMCW), and a pulse signal;
a subcarrier spacing of the sensing signal, for example, a subcarrier spacing 30 KHZ of an OFDM system;
a guard interval of the sensing signal, that is, a time interval between a moment at which a signal whose sending ends and a moment at which a latest echo signal of the signal is received, where the parameter is proportional to a maximum sensing distance and may be obtained by means of calculation by using 2dmax/c, where dmax is the maximum sensing distance, for example, for a self-transmitting and self-receiving sensing signal, dmax represents a maximum distance from a receive point of the sensing signal to a transmit point of the signal; and in some cases, a cyclic prefix CP of an OFDM signal may serve as a minimum guard interval; and c is a speed of light;
a bandwidth of the sensing signal, where the parameter is inversely proportional to a distance resolution and may be obtained by using c/(2*delta_d), where delta_d is the distance resolution (which belongs to a sensing requirement);
burst duration of the sensing signal, where the parameter is inversely proportional to a rate resolution (which belongs to a sensing requirement), and the parameter is a time span of the sensing signal and is mainly used to calculate a Doppler frequency shift; and the parameter may be calculated using c/(2*delta _v*fc), where delta_v is a speed resolution, and fc is a center frequency of the signal;
a time domain interval of the sensing signal, where the parameter may be obtained by means of calculation by using c/(2*fc*v_range), where v_range is a maximum rate minus a minimum speed (which belongs to a sensing requirement), the parameter is a time interval between two adjacent sensing signals, and fc is a carrier frequency of the signal;
a transmit signal power of the sensing signal, for example, a value is taken every 2 dBm from -20 dBm to 23 dBm;
a signal format of the sensing signal, for example, information such as a sounding reference signal (Sounding Reference Signal, SRS), a DMRS, a PRS, or another predefined signal and a related sequence format;
a signal direction of the sensing signal, for example, a direction of the sensing signal or beam information;
a time resource of the sensing signal, for example, a slot index or a symbol index of a slot in which the sensing signal is located, where there are two types of time resources: a one-off time resource, for example, an omnidirectional first signal is sent on one symbol; and a non-one-off time resource, for example, in a plurality of groups of periodic time resources or discontinuous time resources (which may include a start time and an end time), target signals in a same direction are sent on each group of periodic time resources, and beam directions of periodic time resources in different groups are different;
a frequency resource of the sensing signal, including a center frequency, a bandwidth, an RB, and/or a subcarrier of the target signal; and
a quasi-co-location QCL relationship of the sensing signal, for example, the target signal includes a plurality of resources and each resource corresponds to one SSB QCL, where the QCL includes Type A, B, C, or D.

Optionally, the determining configuration information of the sensing signal includes:
receiving at least one of first indication information sent by a first network device, second indication information sent by a second network device, and fourth indication information sent by the first terminal; and
determining the configuration information of the sensing signal according to at least one of the first indication information, the second indication information, and the fourth indication information, where
the first indication information includes at least one of a sensing requirement, first configuration information of the sensing signal, capability information of the first network device, and recommendation configuration information of the first network device;
the second indication information includes at least one of a sensing requirement, second configuration information of the sensing signal, capability information of the second network device, and recommendation configuration information of the second network device; and
the fourth indication information includes at least one of a sensing requirement, fourth configuration information of the sensing signal, capability information of the first terminal, and recommendation configuration information of the first terminal.

Herein, the first configuration information is configuration information that is of the sensing signal and that is determined by the first network device, and the first configuration information may include all configuration information of the sensing signal or some configuration information of the sensing signal; the second configuration information is configuration information that is of the sensing signal and that is determined by the second network device, and the second configuration information may include all configuration information of the sensing signal or some configuration information of the sensing signal; and the fourth configuration information is configuration information that is of the sensing signal and that is determined by the first terminal, and the fourth configuration information may include all configuration information of the sensing signal or some configuration information of the sensing signal.

It should be noted that the sensing requirement in this embodiment of this application includes at least one of a sensing result and a sensing indicator.

The sensing result includes at least one of the following:
characteristic information of a target object: existence, a distance, a location, a speed, an acceleration, a material, a shape, a type, a radar cross section RCS, a polarization scattering characteristic, and the like of the target object;
information about a target event: fall detection, intrusion detection, quantity statistics, indoor positioning, gesture recognition, lip reading recognition, gait recognition, expression recognition, respiration monitoring, heart rate monitoring, and the like; and
information about a target environment: humidity, brightness, temperature, atmospheric pressure, air quality, a weather condition, a terrain, construction/vegetation distribution, population statistics, a population density, a vehicle density, and the like.

The sensing indicator includes at least one of the following:
sensing accuracy, including a distance resolution or an imaging resolution or a moving speed resolution or an angle resolution;
a sensing error, including a distance error or an imaging error or a moving speed error;
a sensing range;
a sensing delay;
a detection probability; and
a false alarm probability.

In this embodiment of this application, the first network device may be a core network device, and specifically, may include a mobile and access management function AMF entity or a sensing function entity. For example, the first network device is a sensing network function or a sensing network element. The second network device may be specifically a base station.

The sensing network function or the sensing network element of the core network meets at least one of the following:
managing overall coordination and scheduling of resources required for sensing, such as sensing resources of a base station and/or UE;
calculating a sensing result and estimating sensing accuracy;
verifying a sensing result and estimating sensing accuracy;
supporting an immediate sensing request;
supporting a delay sensing request;
supporting a periodic or event-triggered sensing request;
supporting cancellation of a periodic or triggering sensing behavior;
corresponding to at least one AMF entity, where after receiving a sensing requirement, the AMF may select one or more sensing network functions or sensing network elements, and factors considered during the selection include at least: requested quality of service (Quality of Service, QoS) (such as sensing accuracy, a response time, and a sensing QoS level), an access type (3rd Generation Partnership Project (3rd Generation Partnership Project, 3GPP) access or non-3GPP access), an access network (Access Network, AN) type (such as 5G NR or eLTE) of the target UE, a serving AN node (such as a gNodeB or an NG-eNodeB), RAN configuration information, a sensing network function/sensing network element capability, a sensing network function or a sensing network element load, a sensing network function or a sensing network element location, a single event reporting or multi-event reporting indication, event reporting duration, and network slice information;
determining a sensing method according to at least one of a type of a sensing client, sensing QoS, a sensing capability of a terminal, and a sensing capability of a network device, where the sensing method includes at least one of the following: sending, by the first network node, the sensing signal, and receiving, by the second network node, the sensing signal; sending and receiving, by the first network node, the sensing signal; sending, by the first network node, the sensing signal, and receiving, by a terminal device associated with the first network node, the sensing signal; sending, by the terminal device, the sensing signal, and receiving, by the second terminal, the sensing signal; sending and receiving, by the terminal device, the sensing signal; and sending, by the terminal device, the sensing signal, and receiving, by the first network node, the sensing signal; and
being located on a core network side or an access network side, where if the sensing network function/sensing network element is on a base station side, compared with being located on the core network, all processes of the sensing service may be completed in a RAN (for a case that the base station triggers the sensing service, or the UE triggers the sensing service).

The first network node and the second network node may be specifically a base station.

Optionally, the sensing network function or the sensing network element of the core network further has at least one of the following characteristics:
interacting with target UE, a serving base station of the target UE, or a base station associated with a target area for target information (the target information includes a processing sensing request, an interaction sensing capability, interaction sensing auxiliary data, an interaction sensing measurement quantity, or a sensing result), to obtain a target sensing result or a sensing measurement quantity (an uplink measurement quantity or a downlink measurement quantity);
the sensing network function or the sensing network element directly interacts with an application server (for example, an application server of an operator) for a sensing request and a sensing result; or the sensing network function or the sensing network element interacts with an AMF for a sensing request and a sensing result, and the AMF may directly or indirectly interact with an application server (for example, a third-party application server) for the sensing request and the sensing result (by using a GMLC and an NEF)); and
the sensing network function or the sensing network element may be a new network element, or an existing network function/network element such as a location management function (Location Management Function, LMF), with an added new sensing-related function.

Optionally, the configuration information of the sensing signal includes at least one of the following:
first configuration information, where the first configuration information is configuration information that is of the sensing signal and that is determined by the first network device;
second configuration information, where the second configuration information is configuration information that is of the sensing signal and that is determined by the second network device;
third configuration information, where the third configuration information is configuration information that is of the sensing signal and that is determined by the second terminal; and
fourth configuration information, where the fourth configuration information is configuration information that is of the sensing signal and that is determined by the first terminal.

Optionally, the second terminal determines the third configuration information by using at least one of the following:
the sensing requirement;
the capability information of the first network device;
the capability information of the second network device;
the recommendation configuration information of the first network device;
the recommendation configuration information of the second network device;
the capability information of the first terminal; and
the recommendation configuration information of the first terminal.

In this embodiment of this application, the configuration information of the sensing signal includes at least one of the following manners:

The configuration is determined by one of the first network device, the second network device, and the UE. Optionally, the other two parties may send a capability or recommend a configuration to a determining party.

The configuration is determined by at least two of the first network device, the second network device, and the UE. For example, the first network device determines five of ten parameters, and the UE determines the other five parameters. Optionally, determining parties may report a capability or recommend a configuration, and a non-determining party may also report a capability or recommend a configuration to the determining party. For example, if the first network device and the UE determine the configuration together, the first network device and the UE may notify each other of the capability or recommend the configuration, and the second network device may also send the capability or recommend the configuration to at least one of the first network device and the UE.

The configuration information of the sensing signal is agreed upon in advance and is associated with the sensing requirement (a mapping table between the sensing requirement and the related configuration of the sensing signal is established in advance). For example, after receiving the sensing requirement sent by the first network device, the first terminal independently selects the corresponding configuration information of the sensing signal.

The UE includes at least one of the first terminal and the second terminal. The second network device (base station) may be at least one of a connected base station of the first terminal and a connected base station of the second terminal, and the connected base station of the first terminal and the connected base station of the second terminal may be the same or different.

Optionally, after the receiving at least one of first indication information sent by a first network device, second indication information sent by a second network device, and fourth indication information sent by the first terminal, the method further includes:
sending third sensing requirement response information to at least one of the first network device, the second network device, and the first terminal in a case that it is determined, according to at least one of the first indication information, the second indication information, and the fourth indication information, to participate in a sensing service, where the third sensing requirement response information is used to indicate that the second terminal agrees to participate in a sensing service; or
sending fourth sensing requirement response information to at least one of the first network device, the second network device, and the first terminal in a case that it is determined, according to at least one of the first indication information, the second indication information, and the fourth indication information, not to participate in a sensing service, where the fourth sensing requirement response information is used to indicate that the second terminal refuses to participate in a sensing service.

In a specific embodiment of this application, the second terminal may agree to or refuse to participate in a sensing service. A specific method includes at least one of the following:
Method 1: After the first network device sends the sensing requirement to the UE, the UE agrees to or refuses to participate, and UE that participates in the sensing service is selected from UE that agrees to provide the sensing requirement.
Method 2: After selecting UE that participates in the sensing service, the first network device or the second network device sends the sensing requirement to the associated UE, and the UE agrees or refuses to participate.
Method 3: Whether the UE can participate in the sensing service is agreed upon in advance, and is stored in a storage node related to a core network, for example, a UDR. After receiving the sensing requirement and selecting UE that participates in the sensing service, the first network device accesses the storage node that stores whether the associated UE can participate in the related sensing service, and obtains information about whether the UE can participate in the related sensing service.

Optionally, the method in this embodiment of this application further includes:
obtaining, by the second terminal, a first measurement quantity sent by a first network device, a second network device, or the first terminal; or
determining the first measurement quantity according to a sensing requirement.

In an optional implementation, after the sending, by a second terminal, a sensing signal to a first terminal, the method further includes:
obtaining a measurement result sent by the first terminal, where the measurement result is a measurement result that is corresponding to a first measurement quantity and that is obtained by the first terminal according to the sensing signal, and the first measurement quantity is a measurement quantity related to the sensing signal; and
determining a sensing result according to the measurement result, or sending the measurement result to the second terminal, a first network device, or a second network device.

Optionally, after the determining a sensing result according to the measurement result, the method further includes:
sending the sensing result to the first network device, the second network device, or the first terminal.

In a second optional implementation, before the sending, by a second terminal, a sensing signal to a first terminal, the method further includes:
sending third indication information to a first network device, a second network device, or the first terminal, where the third indication information includes at least one of a sensing requirement, third configuration information of the sensing signal, capability information of the second terminal, and recommendation configuration information of the second terminal.

Optionally, the method in this embodiment of this application further includes:
obtaining a target sensing result fed back by the first network device, the second network device, or the first terminal according to the third indication information, where
the target sensing result includes a sensing result obtained according to at least one measurement result of the first terminal.

In this implementation, the second terminal may send the sensing service, and the second terminal sends the third indication information to the first network device, the second terminal, or the second network device, and obtains the corresponding target sensing result.

Optionally, the sensing result includes at least one of the following:
characteristic information of a target object;
information about a target event; and
information about a target environment.

In this embodiment of this application, the characteristic information of the target object is understood as information that can reflect an attribute or a status of the target object, and may be at least one of the following: a location of the target object, a speed of the target object, an acceleration of the target object, a material of the target object, a shape of the target object, a type of the target object, a radar cross section RCS (Radar Cross Section, RCS) of the target object, and the like.

The information about the target event may be understood as information related to the target event, that is, information that can be detected/sensed when the target event occurs, and may be fall detection, intrusion detection, quantity statistics, indoor positioning, gesture recognition, lip reading recognition, gait recognition, expression recognition, respiration monitoring, heart rate monitoring, or the like.

The information about the target environment may be at least one of the following: humidity, brightness, temperature, atmospheric pressure, air quality, a weather condition, a terrain, construction/vegetation distribution, population statistics, a population density, a vehicle density, and the like.

It should be noted that, in this embodiment of this application, the sensing result may be directly obtained based on the first measurement quantity, or the first measurement quantity may be further processed by means of calculation, to be converted into an expected sensing result.

In this embodiment of this application, a second terminal sends a sensing signal to a first terminal, so that the first terminal obtains a measurement result corresponding to a first measurement quantity according to the sensing signal, where the first measurement quantity is a measurement quantity related to the sensing signal. In this way, communication sensing is implemented through reception and transmission of a sensing signal by a terminal.

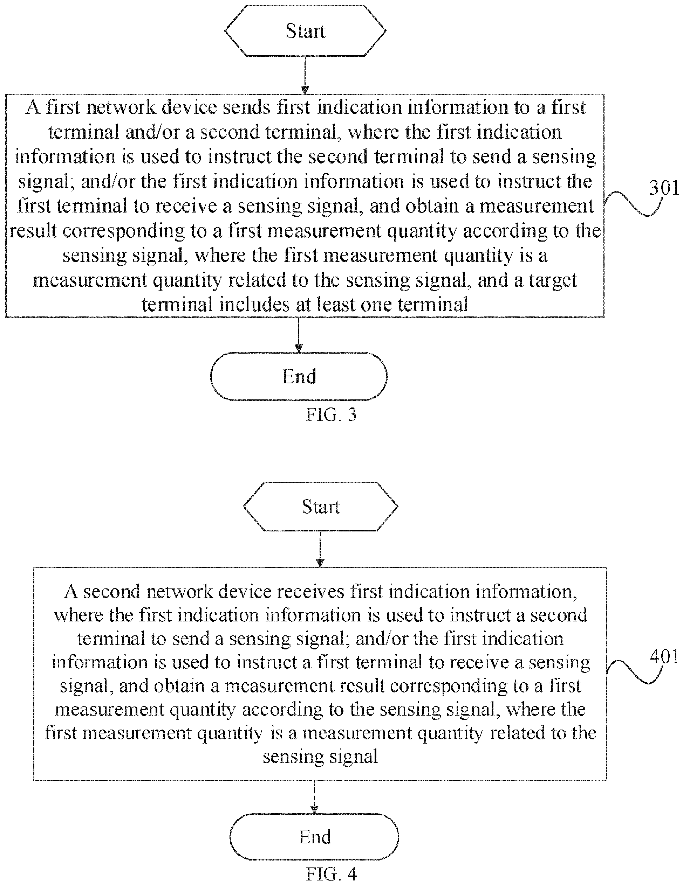

As shown in FIG. 3, an embodiment of this application further provides a communication sensing method, including:
Step 301: A first network device sends first indication information to a first terminal and/or a second terminal, where the first indication information is used to instruct the second terminal to send a sensing signal; and/or the first indication information is used to instruct the first terminal to receive a sensing signal, and obtain a measurement result corresponding to a first measurement quantity according to the sensing signal, where the first measurement quantity is a measurement quantity related to the sensing signal, and a target terminal includes at least one terminal.

In this step, the first measurement quantity is the same as the first measurement quantity in the foregoing method embodiment on the terminal side, and details are not described herein again.

Optionally, the first indication information includes at least one of the following:
a sensing requirement;
first configuration information of the sensing signal;
capability information of the first network device; and
recommendation configuration information of the first network device.

Herein, a first network device sends first indication information to a first terminal and/or a second terminal. The first terminal sends a sensing signal according to the first indication information, and the second terminal receives the sensing signal and obtains a measurement result corresponding to a first measurement quantity, where the first measurement quantity is a measurement quantity related to the sensing signal. In this way, communication sensing is implemented through reception and transmission of a sensing signal by a terminal.

Optionally, after the sending, by a first network device, first indication information to a target terminal, the method further includes:
receiving sensing requirement response information sent by the first terminal, the second terminal, or a second network device, where
the sensing requirement response information includes fifth sensing requirement response information or sixth sensing requirement response information;
the fifth sensing requirement response information is used to indicate that the first terminal or the second terminal agrees to participate in a sensing service; and
the sixth sensing requirement response information is used to indicate that the first terminal or the second terminal refuses to participate in a sensing service.

In a specific embodiment of this application, the first terminal and/or the second terminal may agree to or refuse to participate in a sensing service. A specific method includes at least one of the following:
Method 1: After the first network device sends the sensing requirement to the UE, the UE agrees to or refuses to participate, and UE that participates in the sensing service is selected from UE that agrees to provide the sensing requirement.
Method 2: After selecting UE that participates in the sensing service, the first network device or the second network device sends the sensing requirement to the associated UE, and the UE agrees or refuses to participate.
Method 3: Whether the UE can participate in the sensing service is agreed upon in advance, and is stored in a storage node related to a core network, for example, a UDR. After receiving the sensing requirement and selecting UE that participates in the sensing service, the first network device accesses the storage node that stores whether the associated UE can participate in the related sensing service, and obtains information about whether the UE can participate in the related sensing service.

Optionally, before the sending, by a first network device, first indication information to a first terminal and/or a second terminal, the method further includes:
receiving first target indication information, where the first target indication information includes at least one of second indication information sent by a second network device, third indication information sent by the second terminal, fourth indication information sent by the first terminal, and fifth indication information sent by an application server, where the second indication information includes at least one of a sensing requirement, second configuration information of the sensing signal, capability information of the second network device, and recommendation configuration information of the second network device, the third indication information includes at least one of a sensing requirement, third configuration information of the sensing information, capability information of the second terminal, and recommendation configuration information of the second terminal, the fourth indication information includes at least one of a sensing requirement, fourth configuration information of the sensing information, capability information of the first terminal, and recommendation configuration information of the first terminal, and the fifth indication information includes a sensing requirement; and
determining the first configuration information according to the first target indication information.

Specifically, the determining the first configuration information according to the first target indication information includes:
determining the first configuration information by using at least one of the following:
the sensing requirement;
the capability information of the first terminal;
the capability information of the second network device;
the recommendation configuration information of the first terminal;
the recommendation configuration information of the second network device;
the capability information of the second terminal; and
the recommendation configuration information of the second terminal.

Optionally, the method in this embodiment of this application further includes:
determining a terminal associated with the sensing requirement as the target terminal, where the target terminal includes the first terminal and/or the second terminal.

Optionally, after the determining a terminal associated with the sensing requirement as the target terminal, the method further includes:
obtaining the measurement result sent by the target terminal or a target second network device, where the target second network device is a second network device associated with a second sensing requirement; and
determining a target sensing result according to the measurement result.

Optionally, the method in this embodiment of this application further includes:
obtaining a target sensing result sent by the first terminal, the second terminal, or a target second network device, where the target sensing result is obtained according to the measurement result.

Optionally, the first terminal and/or the second terminal are/is determined by using at least one of the following:
whether the terminal sends a sensing requirement, for example, if the terminal sends the sensing requirement, the terminal is determined as the target terminal;
capability-related information reported by the terminal to the first network device;
information that is fed back by the terminal to the first network device and that is about agreeing to or refusing to participate in a sensing service, for example, a terminal that agrees to participate in the sensing service is determined as the target terminal;
information about whether the terminal participates in a sensing service as agreed in advance;
whether the terminal that participates in a sensing service feeds back sensing response information corresponding to a sensing requirement within a specified time, for example, if the sensing response information is not received, the terminal is not determined as the target terminal;
prior information of the terminal, where the prior information of the terminal includes at least one of a location of the terminal and an area in which the terminal is located; and
information about a base station connected to the terminal.

Optionally, the method in this embodiment of this application further includes:
sending the first indication information to a target second network device associated with a sensing requirement.

Optionally, the target second network device is determined by using at least one of the following:
whether the second network device initiates a second sensing requirement;
information about a terminal connected to the second network device;
capability-related information reported by the second network device to a core network; and
prior information of the second network device, where the prior information of the second network device includes at least one of a location of a base station and an area in which the base station is located.

Optionally, the method in this embodiment of this application further includes:
sending the first measurement quantity to the target second network device.

Optionally, the method in this embodiment of this application further includes:
sending the first measurement quantity to the first terminal and/or the second terminal.

First configuration information of the sensing signal includes at least one of the following:
a waveform of the sensing signal;
a subcarrier spacing of the sensing signal;
a guard interval of the sensing signal;
a bandwidth of the sensing signal;
burst duration of the sensing signal;
a time domain interval of the sensing signal;
a transmit signal power of the sensing signal;
a signal format of the sensing signal;
a signal direction of the sensing signal;
a time resource of the sensing signal;
a frequency resource of the sensing signal; and
a quasi-co-location QCL relationship of the sensing signal.

Specific parameters in the first configuration information are described in detail in the method embodiment on the terminal side, and details are not described herein again.

Optionally, the first network device includes a mobile and access management function AMF entity or a sensing function entity.

Optionally, the sensing function entity meets at least one of the following:
managing overall coordination and scheduling of resources required for sensing;
calculating a sensing result and estimating sensing accuracy;
verifying a sensing result and estimating sensing accuracy;
supporting an immediate sensing request;
supporting a delay sensing request;
supporting a periodic or event-triggered sensing request;
supporting cancellation of a periodic or triggering sensing behavior;
corresponding to at least one AMF entity; and
determining a sensing method according to at least one of a type of a sensing client, sensing QoS, a sensing capability of a terminal, and a sensing capability of a network device, where the sensing method includes at least one of the following: sending, by the first network node, the sensing signal, and receiving, by the second network node, the sensing signal; sending and receiving, by the first network node, the sensing signal; sending, by the first network node, the sensing signal, and receiving, by a terminal device associated with the first network node, the sensing signal; sending, by the terminal device, the sensing signal, and receiving, by the second terminal, the sensing signal; sending and receiving, by the terminal device, the sensing signal; and sending, by the terminal device, the sensing signal, and receiving, by the first network node, the sensing signal.

In this embodiment of this application, a first network device sends first indication information to a first terminal and/or a second terminal. The first terminal sends a sensing signal according to the first indication information, and the second terminal receives the sensing signal and obtains a measurement result corresponding to a first measurement quantity, where the first measurement quantity is a measurement quantity related to the sensing signal. In this way, communication sensing is implemented through reception and transmission of a sensing signal by a terminal.

As shown in FIG. 4, an embodiment of this application further provides a communication sensing method, including:
Step 401: A second network device receives first indication information, where the first indication information is used to instruct a second terminal to send a sensing signal; and/or the first indication information is used to instruct a first terminal to receive a sensing signal, and obtain a measurement result corresponding to a first measurement quantity according to the sensing signal, where the first measurement quantity is a measurement quantity related to the sensing signal.

The second network device may be specifically a base station.

In this embodiment of this application, a second network device receives first indication information, and forwards the first indication information to a first terminal and/or a second terminal, or determines second configuration information of a sensing signal according to the first indication information, and sends the second configuration information to a first terminal and/or a second terminal, so that the second terminal sends the sensing signal, and the first terminal receives the sensing signal and obtains a measurement result corresponding to a first measurement quantity according to the sensing signal. In this way, communication sensing is implemented through reception and transmission of a sensing signal by a terminal.

Optionally, the first indication information includes at least one of the following:
a sensing requirement;
first configuration information of the sensing signal;
capability information of a first network device; and
recommendation configuration information of the first network device.

The first indication information is described in detail in the foregoing embodiment, and details are not described herein again.

Optionally, the method in this embodiment of this application further includes:
receiving sensing requirement response information sent by the first terminal or the second terminal; and
sending the sensing requirement response information to a first network device, where
the sensing requirement response information includes fifth sensing requirement response information or sixth sensing requirement response information;
the fifth sensing requirement response information is used to indicate that the first terminal or the second terminal agrees to participate in a sensing service; and
the sixth sensing requirement response information is used to indicate that the first terminal or the second terminal refuses to participate in a sensing service.

Optionally, the method in this embodiment of this application further includes:
determining second configuration information of the sensing signal according to second target indication information, where the second target indication information includes at least one of the first indication information, third indication information sent by the second terminal, and fourth indication information sent by the first terminal;
the third indication information includes at least one of a sensing requirement, third configuration information of the sensing signal, capability information of the second terminal, and recommendation configuration information of the second terminal; and
the fourth indication information includes at least one of a sensing requirement, fourth configuration information of the sensing signal, capability information of the first terminal, and recommendation configuration information of the first terminal.

Optionally, before the determining second configuration information of the sensing signal according to second target indication information, the method further includes:
receiving at least one of the third indication information and the fourth indication information.

Optionally, the determining second configuration information of the sensing signal according to second target indication information includes:
determining the second configuration information of the sensing signal according to at least one of the following:
the capability information of the first terminal;
the capability information of the first network device;
the recommendation configuration information of the first terminal;
the recommendation configuration information of the first network device;
the capability information of the second terminal; and
the recommendation configuration information of the second terminal.

Optionally, in this embodiment of this application, the method further includes:
sending the second configuration information of the sensing signal to at least one of the first terminal, the second terminal, and the first network device.

Optionally, the second configuration information of the sensing signal includes at least one of the following:
a waveform of the sensing signal;
a subcarrier spacing of the sensing signal;
a guard interval of the sensing signal;
a bandwidth of the sensing signal;
burst duration of the sensing signal;
a time domain interval of the sensing signal;
a transmit signal power of the sensing signal;
a signal format of the sensing signal;
a signal direction of the sensing signal;
a time resource of the sensing signal;
a frequency resource of the sensing signal; and
a quasi-co-location QCL relationship of the sensing signal.

Related parameters in the second configuration information are described in detail in the embodiment on the terminal side, and details are not described herein again.

Optionally, in an embodiment of this application, before the receiving, by a second network device, first indication information, the method further includes:
sending second indication information to a first network device, the first terminal, or the second terminal, where the second indication information includes at least one of capability information of the second network device, a sensing requirement, second configuration information of the sensing signal, and recommendation configuration information of the second network.

In this embodiment, the method further includes:
obtaining a target sensing result fed back by the first network device, the first terminal, or the second terminal according to the second indication information, where the target sensing result is obtained according to the measurement result.

Optionally, in another embodiment of this application, the method further includes:
obtaining the measurement result; and
determining a target sensing result according to the measurement result.

Optionally, the method in this embodiment further includes:
sending the target sensing result to a first network device, the first terminal, or the second terminal.

Optionally, the first network device includes a mobile and access management function AMF entity or a sensing function entity.

Optionally, the sensing function entity meets at least one of the following:
managing overall coordination and scheduling of resources required for sensing;
calculating a sensing result and estimating sensing accuracy;
verifying a sensing result and estimating sensing accuracy;
supporting an immediate sensing request;
supporting a delay sensing request;
supporting a periodic or event-triggered sensing request;
supporting cancellation of a periodic or triggering sensing behavior;
corresponding to at least one AMF entity; and
determining a sensing method according to at least one of a type of a sensing client, sensing QoS, a sensing capability of a terminal, and a sensing capability of a network device, where the sensing method includes at least one of the following: sending, by the first network node, the sensing signal, and receiving, by the second network node, the sensing signal; sending and receiving, by the first network node, the sensing signal; sending, by the first network node, the sensing signal, and receiving, by a terminal device associated with the first network node, the sensing signal; sending, by the terminal device, the sensing signal, and receiving, by the second terminal, the sensing signal; sending and receiving, by the terminal device, the sensing signal; and sending, by the terminal device, the sensing signal, and receiving, by the first network node, the sensing signal.

In this embodiment of this application, a second network device receives first indication information, and forwards the first indication information to a first terminal and/or a second terminal, or determines second configuration information of a sensing signal according to the first indication information, and sends the second configuration information to a first terminal and/or a second terminal, so that the second terminal sends the sensing signal, and the first terminal receives the sensing signal and obtains a measurement result corresponding to a first measurement quantity according to the sensing signal. In this way, communication sensing is implemented through reception and transmission of a sensing signal by a terminal.

The following describes the communication sensing method in this application in detail with reference to specific embodiments.

Embodiment 1: UE A sends a sensing signal, and UE B receives the sensing signal, and a third-party application initiates a sensing service.

This embodiment includes:
(1) An application server receives a sensing requirement of the third-party application, where the sensing requirement includes a desired sensing result and/or a sensing indicator.
(2) The application server (including an on-net server, such as an IP multimedia subsystem (IP Multimedia Subsystem, IMS) or an off-net server) sends the sensing requirement to a core network (for example, an AMF) or a sensing network function or a sensing network element of the core network, or the application server sends the sensing requirement to an AMF, and the AMF sends the requirement to a sensing network function or a sensing network element.
(3) A network function or a network element of the core network (for example, the sensing network function or the sensing network element) determines, according to the sensing requirement, that transmit UE (that is, the UE A) and receive UE (that is, the UE B) are associated, and sends the sensing requirement to the associated UE A and/or UE B (if a related configuration and a measurement quantity of the sensing signal are totally determined by the core network and/or the base station, the sensing requirement does not need to be sent to the UE A and/or the UE B).

Optionally, (for a case that the base station schedules the UE A to send the sensing signal, or a case that the base station participates in determining whether the UE A sends the sensing signal, or a case that the base station is responsible for converting the measurement quantity to a sensing result), the network function or the network element of the core network (for example, the sensing network function or the sensing network element) determines an associated base station according to the sensing requirement, and sends the sensing requirement to the associated base station (if the related configuration and the measurement quantity of the sensing signal are totally determined by at least one of the core network, the UE A, and the UE B, the sensing requirement does not need to be sent to the base station).

Herein, a method for determining associated UE or an associated base station is described in detail in the foregoing descriptions, and details are not described herein again.

A method for sending the sensing requirement to the UE A and/or the UE B includes at least:
sending, by the network function or the network element of the core network (for example, the sensing network function or the sensing network element), the sensing requirement to the UE A;
sending, by the network function or the network element of the core network (for example, the sensing network function or the sensing network element), the sensing requirement to the UE A, and sending, by the UE A, the sensing requirement to the UE B; and
sending, by the network function or the network element of the core network (for example, the sensing network function/sensing network element), the sensing requirement to the UE A and the UE B.

(4) Determine related configuration information of the sensing signal according to the sensing requirement (for example, determine a bandwidth size of the sensing signal according to a sensing resolution requirement), including the following manners:
Manner 1: The configuration is determined by one of the base station, the core network, and the UE. Optionally, the other two parties may send a capability or recommend a configuration to a determining party. The UE herein includes at least one of the UE A and the UE B.
Manner 2: The configuration is determined by at least two of the base station, the core network, and the UE (at least one of the UE A and the UE B). For example, the core network determines five of ten parameters, and the UE A determines the other five parameters. Optionally, determining parties may report a capability or recommend a configuration, and a non-determining party may also report a capability or recommend a configuration to the determining party. For example, if the core network and the UE A jointly determine the configuration, the core network and the UE A may notify each other of the capability or recommend the configuration, and the base station and/or the UE B may also send the capability or recommend the configuration to at least one of the core network and the UE A.
Manner 3: The related configuration of the sensing signal is agreed upon in advance and is associated with the sensing requirement (a mapping table between the related configuration of the sensing requirement and the sensing signal is established in advance). For example, after receiving the sensing requirement sent by the core network, the UE A independently selects the corresponding configuration of the sensing signal.

(5) The determining party of the related configuration information of the sensing signal sends the related configuration information of the sensing signal to the remaining party. For example, if the determining party of the related configuration information of the sensing signal is the core network, the core network sends the related configuration information of the sensing signal to the UE A and the UE B (the core network sends the configuration to the UE A, and the UE A sends the configuration to the UE B) and the base station (if required). If the related configuration information of the sensing signal is determined jointly by the core network and the UE A, the core network and the UE A notify each other of some related configuration information of the sensing signal, and then at least one of the two sends the related configuration information of the sensing signal to the UE B and the base station (if required).

If the related configuration of the sensing signal is agreed upon in advance and is associated with the sensing requirement, the related configuration information of the sensing signal does not need to be indicated.

(6) The network function or the network element of the core network (for example, the sensing network function or the sensing network element) sends, to the UE A and the UE B and the base station (if required), the measurement quantity that is related to the sensing signal and that needs to be measured or reported by a receive end of the sensing signal (or the core network sends the measurement quantity the UE A, and the UE A sends the measurement quantity to the UE B).

Optionally, the measurement quantity is determined according to the sensing requirement, and no separate signaling indication is required (a mapping table between the sensing requirement and the measurement quantity is established).

(7) The UE A sends the sensing signal according to the related configuration information of the sensing signal.

(8) The UE B receives the sensing signal and obtains a measurement quantity result (which may also be described as a measurement result).

If the network function or the network element of the core network (for example, the sensing network function or the sensing network element) converts the measurement quantity result into the sensing result, this embodiment further includes:
(9a) The UE B Send the measurement quantity result to the network function or the network element of the core network (for example, the sensing network function or the sensing network element), or the UE B sends the measurement quantity result to the UE A, and the UE A sends the measurement quantity result to the network function or the network element of the core network (for example, the sensing network function or the sensing network element).
(9b) The network function or the network element of the core network (for example, the sensing network function/sensing network element) sends the measurement quantity result to the application server, and the application server determines the sensing result according to the measurement quantity; or
   the network function or the network element of the core network (for example, the sensing network function or the sensing network element) determines the sensing result according to the measurement quantity result, and sends the sensing result to the application server.
(9c) The application server sends the sensing result to the third-party application.

If the base station converts the measurement quantity result into the sensing result, this embodiment further includes:
(10a) The UE B sends the measurement quantity result to the base station, or the UE B sends the measurement quantity result to the UE A, and the UE A sends the measurement quantity result to the base station.
(10b) The base station determines the sensing result according to the measurement quantity result, and sends the sensing result to the network function or the network element of the core network (for example, the sensing network function or the sensing network element).
(10c) The network function or the network element of the core network (for example, the sensing network function or the sensing network element) sends the sensing result to the application server.
(10d) The application server sends the sensing result to the third-party application.

If the UE converts the measurement quantity result into the sensing result, this embodiment further includes:
(11a) The UE B determines the sensing result according to the measurement quantity result, and sends the sensing result to the network function or the network element of the core network (for example, the sensing network function or the sensing network element); or the UE B sends the measurement quantity result to the UE A, and the UE A determines the sensing result according to the measurement quantity result, and sends the sensing result to the network function or the network element of the core network (for example, the sensing network function or the sensing network element).
(11b) The network function or the network element of the core network (for example, the sensing network function/sensing network element) sends the sensing result to the application server.
(11c) The application server sends the sensing result to the third-party application.

Embodiment 2: UE A sends a sensing signal, UE B receives the sensing signal, and a core network (a network management system or a base station) initiates a sensing service.

This embodiment includes:
(1) An AMF of the core network sends a sensing requirement to a sensing network function or a sensing network element; or
   an AMF receives a sensing requirement sent by the network management system, and forwards the sensing requirement to a sensing network function or a sensing network element; or
   an AMF receives a sensing requirement sent by the base station, and forwards the sensing requirement to a sensing network function or a sensing network element.
(2) A network function or a network element of the core network (for example, the sensing network function or the sensing network element) determines associated UE according to the sensing requirement, and sends the sensing requirement to the associated UE (if a related configuration and a measurement quantity of the sensing signal are totally determined by the core network and/or the base station, the sensing requirement does not need to be sent to the associated UE). Herein, the associated UE includes the UE A and/or the UE B.

Optionally, (for a case that the base station schedules the UE to send the sensing signal, or a case that the base station participates in determining whether the UE sends the sensing signal, or a case that the base station is responsible for converting the measurement quantity to a sensing result), the network function or the network element of the core network (for example, the sensing network function or the sensing network element) determines an associated base station according to the sensing requirement, and sends the sensing requirement to the associated base station (if the related configuration and the measurement quantity of the sensing signal are totally determined by the core network and/or the associated UE, the sensing requirement does not need to be sent to the base station).

Herein, a method for determining associated UE or an associated base station is described in detail in the foregoing descriptions, and details are not described herein again.

(3) The determining party of the related configuration information of the sensing signal sends the related configuration information of the sensing signal to the remaining party. If the related configuration of the sensing signal is agreed upon in advance and is associated with the sensing requirement, the related configuration information of the sensing signal does not need to be indicated.

Herein, descriptions of the related configuration information of the sensing signal and a specific sending manner are the same as those in Embodiment 1.

(4) The network function or the network element of the core network (for example, the sensing network function or the sensing network element) sends, to the UE A and the UE B and the base station (if required), the measurement quantity that is related to the sensing signal and that needs to be measured or reported by a receive end of the sensing signal (or the core network sends the measurement quantity the UE A, and the UE A sends the measurement quantity to the UE B).

Optionally, the measurement quantity is determined according to the sensing requirement, and no separate signaling indication is required (a mapping table between the sensing requirement and the measurement quantity is established).

(5) The UE A sends the sensing signal according to the related configuration information of the sensing signal.

(6) The UE B receives an echo signal of the sensing signal and obtains a measurement quantity result (that is, the foregoing measurement result).

If the network function or the network element of the core network (for example, the sensing network function or the sensing network element) converts the measurement quantity result into the sensing result, this embodiment further includes:
(7a) The UE B Send the measurement quantity result to the network function or the network element of the core network (for example, the sensing network function or the sensing network element), or the UE B sends the measurement quantity result to the UE A, and the UE A sends the measurement quantity result to the network function or the network element of the core network (for example, the sensing network function or the sensing network element).
(7b) If the sensing requirement is from the network system, the network function or the network element of the core network (for example, the sensing network function/sensing network element) converts the measurement quantity result into the sensing result and sends the sensing result to the network management system.
(7d) If the sensing requirement is from the base station, the network function or the network element of the core network (for example, the sensing network function/sensing network element) converts the measurement quantity result into the sensing result and sends the sensing result to the base station.

If the base station converts the measurement quantity result into the sensing result, this embodiment further includes:
(8a) The UE B sends the measurement quantity result to the base station; or the UE B sends the measurement quantity result to the UE A, and the UE A sends the measurement quantity result to the base station.
(8b) The base station determines the sensing result according to the measurement quantity result, and sends the sensing result to the network function or the network element of the core network (for example, the sensing network function or the sensing network element).
(8c) If the sensing requirement is from the network system, the network function or the network element of the core network (for example, the sensing network function/sensing network element) sends the sensing result to the network management system.
(8d) If the sensing requirement is from the base station, the network function or the network element of the core network (for example, the sensing network function/sensing network element) sends the sensing result to the base station.

If the UE converts the measurement quantity result into the sensing result, this embodiment further includes:
(9a) The UE B determines the sensing result according to the measurement quantity result, and sends the sensing result to the network function or the network element of the core network (for example, the sensing network function or the sensing network element); or the UE B sends the measurement quantity result to the UE A, and the UE A determines the sensing result according to the measurement quantity result, and sends the sensing result to the network function or the network element of the core network (for example, the sensing network function or the sensing network element).
(9b) If the sensing requirement is from the network system, the network function or the network element of the core network (for example, the sensing network function/sensing network element) sends the sensing result to the network management system.
(9c) If the sensing requirement is from the base station, the network function or the network element of the core network (for example, the sensing network function/sensing network element) sends the sensing result to the base station.

Embodiment 3: UE A sends a sensing signal, UE B receives the sensing signal, and UE initiates a sensing service.

This embodiment includes:
(1) The UE (which may be the UE A, the UE B, or other UE) sends the sensing requirement or related configuration information of the sensing signal to an AMF of a core network by using NAS signaling.
(2) The AMF of the core network sends the sensing requirement to a sensing network function or a sensing network element.
(3) A network function or a network element of the core network (for example, the sensing network function or the sensing network element) determines associated UE (the UE A and the UE B) according to the sensing requirement, and sends the sensing requirement to the associated UE (if a related configuration and a measurement quantity of the sensing signal are totally determined by the core network and/or a base station, the sensing requirement does not need to be sent to the associated UE).

Optionally, (for a case that the base station schedules the UE to send the sensing signal, or a case that the base station participates in determining whether the UE sends the sensing signal, or a case that the base station is responsible for converting the measurement quantity to a sensing result), the network function or the network element of the core network (for example, the sensing network function or the sensing network element) determines an associated base station according to the sensing requirement, and sends the sensing requirement to the associated base station (if the related configuration and the measurement quantity of the sensing signal are totally determined by the core network and/or the associated UE, the sensing requirement does not need to be sent to the base station).

Herein, a method for determining associated UE or an associated base station is described in detail in the foregoing descriptions, and details are not described herein again.

(4) The determining party of the related configuration information of the sensing signal sends the related configuration information of the sensing signal to the remaining party. If the related configuration of the sensing signal is agreed upon in advance and is associated with the sensing requirement, the related configuration information of the sensing signal does not need to be indicated.

Herein, descriptions of the related configuration information of the sensing signal and a specific sending manner are the same as those in Embodiment 1.

(5) The network function or the network element of the core network (for example, the sensing network function or the sensing network element) sends, to the UE A and the UE B and the base station (if required), the measurement quantity that is related to the sensing signal and that needs to be measured or reported by a receive end of the sensing signal (or the core network sends the measurement quantity the UE A, and the UE A sends the measurement quantity to the UE B).

Optionally, the measurement quantity is determined according to the sensing requirement, and no separate signaling indication is required (a mapping table between the sensing requirement and the measurement quantity is established).

(6) The UE A sends the sensing signal according to the related configuration information of the sensing signal.

(7) The UE B receives the sensing signal and obtains a measurement quantity result (that is, the foregoing measurement result).

If the network function or the network element of the core network (for example, the sensing network function or the sensing network element) converts the measurement quantity result into the sensing result, this embodiment further includes:
(8a) The UE B Send the measurement quantity result to the network function or the network element of the core network (for example, the sensing network function or the sensing network element), or the UE B sends the measurement quantity result to the UE A, and the UE A sends the measurement quantity result to the network function or the network element of the core network (for example, the sensing network function or the sensing network element).
(8b) The network function or the network element of the core network (for example, the sensing network function/sensing network element) converts the measurement quantity result into the sensing result.
(8c) The network function or the network element of the core network (for example, the sensing network function/sensing network element) sends the sensing result to the UE (the UE that initiates the sensing requirement may be the UE A, the UE B, or other UE), for example, sends the sensing result to the UE by using NAS signaling.

If the base station converts the measurement quantity result into the sensing result, this embodiment further includes:
(9a) The UE B sends the measurement quantity result to the base station, or the UE B sends the measurement quantity result to the UE A, and the UE A sends the measurement quantity result to the base station.
(9b) The base station determines the sensing result according to the measurement quantity result, and sends the sensing result to the network function or the network element of the core network (for example, the sensing network function or the sensing network element) or directly sends the sensing result to the UE that initiates a sensing service.
(9c) The network function or the network element of the core network (for example, the sensing network function or the sensing network element) sends the sensing result to the UE that initiates the sensing service, for example, sends, by using NAS signaling, the sensing result to the UE that initiates the sensing service.

If the UE converts the measurement quantity result into the sensing result, this embodiment further includes:
(10a) The UE B determines the sensing result according to the measurement quantity, and sends the sensing result to the network function or the network element of the core network (for example, the sensing network function or the sensing network element); or the UE B sends the measurement quantity result to the UE A, and the UE A determines the sensing result according to the measurement quantity result, and sends the sensing result to the network function or the network element of the core network (for example, the sensing network function or the sensing network element).
(10b) The network function or the network element of the core network (for example, the sensing network function/sensing network element) sends the sensing result to the UE that initiates the sensing service.

It should be noted that, in the foregoing embodiments, message exchange (message sending/receiving) between the network function or the network element of the core network (for example, the sensing network function or the sensing network element) and another node may be that the network function or the network element of the core network (for example, the sensing network function/sensing network element) directly performs sending, or the network function or the network element of the core network (for example, the sensing network function/sensing network element) directly performs sending performs message exchange by using the AMF.

A charging function is implemented in the core network or the application server.

The sensing signal in the foregoing procedures may be sent by a plurality of UEs and/or received by plurality of UEs and sent by one or more UEs.

In this case, the core network/base station needs to determine a UE set for sending a sensing signal and a UE set for receiving a sensing signal, separately send related configuration information of one or more sensing signals to a plurality of corresponding base stations and a plurality of corresponding UEs, and separately send, to the plurality of corresponding UEs, related measurement quantities that are of sensing signals and that need to be measured by receive UE. Optionally, related configuration information of the sensing signals needs to be exchanged between the plurality of UEs (UE that sends a sensing signal and/or UE that receives a sensing signal). Optionally, measurement quantity results of the sensing signals need to be exchanged between the plurality of UEs (UE that sends a sensing signal and/or UE that receives a sensing signal).

In the foregoing procedures, message exchange between the network function or the network element of the core network (for example, the sensing network function/sensing network element) and the UE may be performed by the base station, and the message is transparent to the base station, for example, by using NAS signaling.

The UE may choose to agree to or refuse to participate in the sensing procedures. The method may include:
After the network function or the network element of the core network (for example, the sensing network function/sensing network element) sends the sensing requirement to the UE, the UE agrees or refuses to participate, and UE that participates in the sensing service (corresponding to the content of the foregoing determined associated UE) is selected from UE that agrees to provide the sensing requirement.

After selecting the UE that participates in the sensing service, the base station or the core network sends a participation sensing request message to the associated UE, and the UE agrees to or refuses to participate.

Whether the UE can participate in the related sensing service is agreed upon in advance, and is stored in a related storage node of the core network, for example, a unified data repository (Unified Data Repository, UDR). After receiving the sensing requirement and selecting the UE that participates in the sensing service, the network function or the network element of the core network (for example, the sensing network function/sensing network element) accesses the storage node that stores whether the associated UE can participate in the related sensing service, to obtain information about whether the UE can participate in the related sensing service.

In addition, in the foregoing embodiments, the network function or the network element of the core network (for example, the sensing network function/sensing network element), the application server, or another node completes a supervision procedure.

It should be noted that the communication sensing method provided in the embodiments of this application may be performed by a communication sensing apparatus, or a control module that is in the communication sensing apparatus and that is configured to perform the communication sensing method. In the embodiments of this application, an example in which the communication sensing apparatus performs the communication sensing method is used to describe the communication sensing apparatus provided in the embodiments of this application.

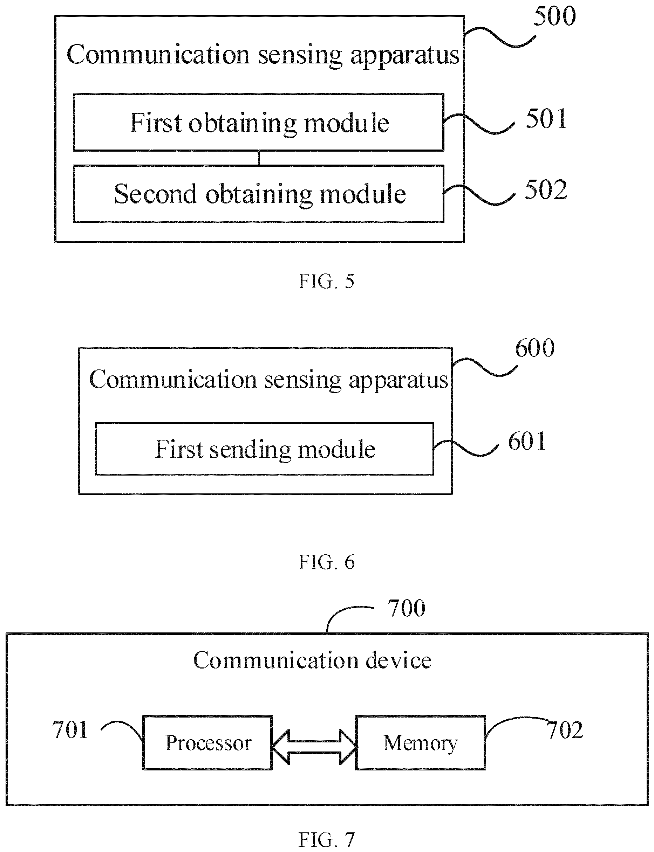

As shown in FIG. 5, an embodiment of this application provides a communication sensing apparatus 500, including:
a first obtaining module 501, configured to obtain a sensing signal sent by a second terminal; and
a second obtaining module 502, configured to obtain a measurement result corresponding to a first measurement quantity according to the sensing signal, where the first measurement quantity is a measurement quantity related to the sensing signal.

Optionally, the first obtaining module includes:
a first obtaining submodule, configured to determine configuration information of the sensing signal; and
a first obtaining submodule, configured to obtain the sensing signal according to the configuration information of the sensing signal.

Optionally, the first determining submodule includes:
a first receiving subunit, configured to receive at least one of first indication information sent by a first network device, second indication information sent by a second network device, and third indication information sent by the second terminal; and
a first determining unit, configured to determine the configuration information of the sensing signal according to at least one of the first indication information, the second indication information, and the third indication information, where
the first indication information includes at least one of a sensing requirement, first configuration information of the sensing signal, capability information of the first network device, and recommendation configuration information of the first network device;
the second indication information includes at least one of a sensing requirement, second configuration information of the sensing signal, capability information of the second network device, and recommendation configuration information of the second network device; and
the third indication information includes at least one of a sensing requirement, third configuration information of the sensing signal, capability information of the second terminal, and recommendation configuration information of the second terminal.

Optionally, the configuration information of the sensing signal includes at least one of the following:
first configuration information, where the first configuration information is configuration information that is of the sensing signal and that is determined by the first network device;
second configuration information, where the second configuration information is configuration information that is of the sensing signal and that is determined by the second network device;
third configuration information, where the third configuration information is configuration information that is of the sensing signal and that is determined by the second terminal; and
fourth configuration information, where the fourth configuration information is configuration information that is of the sensing signal and that is determined by the first terminal.

Optionally, the fourth configuration information is determined by using at least one of the following:
the sensing requirement;
the capability information of the first network device;
the capability information of the second network device;
the recommendation configuration information of the first network device;
the recommendation configuration information of the second network device;
the capability information of the second terminal; and
the recommendation configuration information of the second terminal.

Optionally, the first determining submodule further includes:
a first sending unit, configured to: after the first receiving subunit receives at least one of the first indication information sent by the first network device, the second indication information sent by the second network device, and the third indication information sent by the second terminal, send first sensing requirement response information to at least one of the first network device, the second network device, and the second terminal in a case that it is determined, according to at least one of the first indication information, the second indication information, and the third indication information, to participate in a sensing service, where the first sensing requirement response information is used to indicate that the first terminal agrees to participate in a sensing service; or
send second sensing requirement response information to at least one of the first network device, the second network device, and the second terminal in a case that it is determined, according to at least one of the first indication information, the second indication information, and the third indication information, not to participate in a sensing service, where the second sensing requirement response information is used to indicate that the first terminal refuses to participate in a sensing service.

Optionally, the configuration information of the sensing signal includes at least one of the following:
a waveform of the sensing signal;
a subcarrier spacing of the sensing signal;
a guard interval of the sensing signal;
a bandwidth of the sensing signal;
burst duration of the sensing signal;
a time domain interval of the sensing signal;
a transmit signal power of the sensing signal;
a signal format of the sensing signal;
a signal direction of the sensing signal;
a time resource of the sensing signal;
a frequency resource of the sensing signal; and
a quasi-co-location QCL relationship of the sensing signal.

Optionally, the apparatus further includes:
a third obtaining module, configured to obtain the first measurement quantity sent by a first network device, a second network device, or the second terminal; or
determine the first measurement quantity according to a sensing requirement.

Optionally, the apparatus in this embodiment of this application further includes:
a third sending module, configured to: after the second obtaining module obtains the measurement result corresponding to the first measurement quantity according to the sensing signal, send the measurement result to a first network device, a second network device, or the second terminal.

Optionally, the apparatus in this embodiment of this application further includes:
a first determining module, configured to: after the second obtaining module obtains the measurement result corresponding to the first measurement quantity according to the sensing signal, determine a sensing result according to the measurement result; and
a fourth sending module, configured to send the sensing result to a first network device, a second network device, or the second terminal.

Optionally, the apparatus in this embodiment of this application further includes:
a fifth sending module, configured to: before the first obtaining module obtains the sensing signal sent by the second terminal, send fourth indication information to a first network device, a second network device, or the second terminal, where the fourth indication information includes at least one of a sensing requirement, fourth configuration information of the sensing signal, capability information of the first terminal, and recommendation configuration information of the first terminal.

Optionally, the apparatus in this embodiment of this application further includes:
a fourth obtaining module, configured to: after the second obtaining module obtains the measurement result corresponding to the first measurement quantity according to the sensing signal, obtain a target sensing result fed back by the first network device, the second network device, or the second terminal according to the fourth indication information, where
the target sensing result includes a sensing result obtained according to at least one measurement result of the first terminal.

Optionally, according to the apparatus in this embodiment of this application, the first measurement quantity includes at least one of the following:
a channel matrix H;
a received signal strength indicator RSSI;
a reference signal received power RSRP;
channel state information CSI;
a power, a delay, and/or angle information of each path in a multipath channel;

Doppler spread;
a Doppler frequency shift;
a phase difference between a first antenna and a second antenna;
a delay difference between the first antenna and the second antenna;
a characteristic difference between an inphase signal and a quadrature signal; and
angle-related information.

Optionally, according to the apparatus in this embodiment of this application, the sensing result includes at least one of the following:
characteristic information of a target object;
information about a target event; and
information about a target environment.

Optionally, according to the apparatus in this embodiment of this application, the first network device includes a mobile and access management function AMF entity or a sensing function entity.

Optionally, according to the apparatus in this embodiment of this application, the sensing function entity meets at least one of the following:
managing overall coordination and scheduling of resources required for sensing;
calculating a sensing result and estimating sensing accuracy;
verifying a sensing result and estimating sensing accuracy;
supporting an immediate sensing request;
supporting a delay sensing request;
supporting a periodic or event-triggered sensing request;
supporting cancellation of a periodic or triggering sensing behavior;
corresponding to at least one AMF entity; and
determining a sensing method according to at least one of a type of a sensing client, sensing QoS, a sensing capability of a terminal, and a sensing capability of a network device, where the sensing method includes at least one of the following: sending, by the first network node, the sensing signal, and receiving, by the second network node, the sensing signal; sending and receiving, by the first network node, the sensing signal; sending, by the first network node, the sensing signal, and receiving, by a terminal device associated with the first network node, the sensing signal; sending, by the terminal device, the sensing signal, and receiving, by the second terminal, the sensing signal; sending and receiving, by the terminal device, the sensing signal; and sending, by the terminal device, the sensing signal, and receiving, by the first network node, the sensing signal.

As shown in FIG. 6, an embodiment of this application provides a communication sensing apparatus 60, including:
a first sending module 601, configured to send a sensing signal to a first terminal.

Optionally, the apparatus in this embodiment of this application further includes:
a target determining module, configured to determine the sensing signal.

Optionally, the first sending module includes:
a second determining submodule, configured to determine configuration information of the sensing signal; and
a first sending submodule, configured to send the sensing signal according to the configuration information of the sensing signal.

Optionally, the second determining submodule includes:
a second receiving unit, configured to receive at least one of first indication information sent by a first network device, second indication information sent by a second network device, and fourth indication information sent by the first terminal; and
a third determining unit, configured to determine the configuration information of the sensing signal according to at least one of the first indication information, the second indication information, and the fourth indication information, where
the first indication information includes at least one of a sensing requirement, first configuration information of the sensing signal, capability information of the first network device, and recommendation configuration information of the first network device;
the second indication information includes at least one of a sensing requirement, second configuration information of the sensing signal, capability information of the second network device, and recommendation configuration information of the second network device; and
the fourth indication information includes at least one of a sensing requirement, fourth configuration information of the sensing signal, capability information of the first terminal, and recommendation configuration information of the first terminal.

Optionally, the configuration information of the sensing signal includes at least one of the following:
first configuration information, where the first configuration information is configuration information that is of the sensing signal and that is determined by the first network device;
second configuration information, where the second configuration information is configuration information that is of the sensing signal and that is determined by the second network device;
third configuration information, where the third configuration information is configuration information that is of the sensing signal and that is determined by the second terminal; and
fourth configuration information, where the fourth configuration information is configuration information that is of the sensing signal and that is determined by the first terminal.

Optionally, the third configuration information is determined by using at least one of the following:
the sensing requirement;
the capability information of the first network device;
the capability information of the second network device;
the recommendation configuration information of the first network device;
the recommendation configuration information of the second network device;
the capability information of the first terminal; and
the recommendation configuration information of the first terminal.

Optionally, the second determining submodule further includes:
after a third receiving unit is configured to receive at least one of the first indication information sent by the first network device, the second indication information sent by the second network device, and the fourth indication information sent by the first terminal, further including:
a second sending unit, configured to send third sensing requirement response information to at least one of the first network device, the second network device, and the first terminal in a case that it is determined, according to at least one of the first indication information, the second indication information, and the fourth indication information, to participate in a sensing service, where the third sensing requirement response information is used to indicate that the second terminal agrees to participate in a sensing service; or
send fourth sensing requirement response information to at least one of the first network device, the second network device, and the first terminal in a case that it is determined, according to at least one of the first indication information, the second indication information, and the fourth indication information, not to participate in a sensing service, where the fourth sensing requirement response information is used to indicate that the second terminal refuses to participate in a sensing service.

Optionally, the configuration information of the sensing signal includes at least one of the following:
a waveform of the sensing signal;
a subcarrier spacing of the sensing signal;
a guard interval of the sensing signal;
a bandwidth of the sensing signal;
burst duration of the sensing signal;
a time domain interval of the sensing signal;
a transmit signal power of the sensing signal;
a signal format of the sensing signal;
a signal direction of the sensing signal;
a time resource of the sensing signal;
a frequency resource of the sensing signal; and
a quasi-co-location QCL relationship of the sensing signal.

Optionally, the apparatus in this embodiment of this application further includes:
a fifth obtaining module, configured to obtain a first measurement quantity sent by a first network device, a second network device, or the first terminal; or
determine the first measurement quantity according to a sensing requirement.

Optionally, the apparatus in this embodiment of this application further includes:
a sixth obtaining module, configured to: after the first sending module sends the sensing signal to the first terminal, obtain a measurement result sent by the first terminal, where the measurement result is a measurement result that is corresponding to a first measurement quantity and that is obtained by the first terminal according to the sensing signal, and the first measurement quantity is a measurement quantity related to the sensing signal; and
a first processing module, configured to: determine a sensing result according to the measurement result, or send the measurement result to the second terminal, a first network device, or a second network device.

Optionally, the apparatus in this embodiment of this application further includes:
a sixth sending module, configured to: after the first processing module determines the sensing result according to the measurement result, send the sensing result to the first network device, the second network device, or the first terminal.

Optionally, the apparatus in this embodiment of this application further includes:
a seventh sending module, configured to: before the first sending module sends the sensing signal to the first terminal, send third indication information to a first network device, a second network device, or the first terminal, where the third indication information includes at least one of a sensing requirement, third configuration information of the sensing signal, capability information of the second terminal, and recommendation configuration information of the second terminal.

Optionally, the apparatus in this embodiment of this application further includes:
a seventh obtaining module, configured to obtain a target sensing result fed back by the first network device, the second network device, or the first terminal according to the third indication information, where
the target sensing result includes a sensing result obtained according to at least one measurement result of the first terminal.

Optionally, according to the apparatus in this embodiment of this application, the first measurement quantity includes at least one of the following:
a channel matrix H;
a received signal strength indicator RSSI;
a reference signal received power RSRP;
channel state information CSI;
a power, a delay, and/or angle information of each path in a multipath channel;

Doppler spread;
a Doppler frequency shift;
a phase difference between a first antenna and a second antenna;
a delay difference between the first antenna and the second antenna;
a characteristic difference between an inphase signal and a quadrature signal; and
angle-related information.

Optionally, according to the apparatus in this embodiment of this application, the sensing result includes at least one of the following:
characteristic information of a target object;
information about a target event; and
information about a target environment.

Optionally, according to the apparatus in this embodiment of this application, the first network device includes a mobile and access management function AMF entity or a sensing function entity.

Optionally, according to the apparatus in this embodiment of this application, the sensing function entity meets at least one of the following:
managing overall coordination and scheduling of resources required for sensing;
calculating a sensing result and estimating sensing accuracy;
verifying a sensing result and estimating sensing accuracy;
supporting an immediate sensing request;
supporting a delay sensing request;
supporting a periodic or event-triggered sensing request;
supporting cancellation of a periodic or triggering sensing behavior;
corresponding to at least one AMF entity; and
determining a sensing method according to at least one of a type of a sensing client, sensing QoS, a sensing capability of a terminal, and a sensing capability of a network device, where the sensing method includes at least one of the following: sending, by the first network node, the sensing signal, and receiving, by the second network node, the sensing signal; sending and receiving, by the first network node, the sensing signal; sending, by the first network node, the sensing signal, and receiving, by a terminal device associated with the first network node, the sensing signal; sending, by the terminal device, the sensing signal, and receiving, by the second terminal, the sensing signal; sending and receiving, by the terminal device, the sensing signal; and sending, by the terminal device, the sensing signal, and receiving, by the first network node, the sensing signal.

In this embodiment of this application, a sensing signal is sent to a first terminal, so that the first terminal obtains a measurement result corresponding to a first measurement quantity according to the sensing signal, where the first measurement quantity is a measurement quantity related to the sensing signal. In this way, communication sensing is implemented through reception and transmission of a sensing signal by a terminal.

The communication sensing apparatus in this embodiment of this application may be an apparatus, an apparatus or an electronic device with an operating system, or may be a component, an integrated circuit, or a chip in a terminal. The apparatus or the electronic device may be a mobile terminal, or a non-mobile terminal. For example, the mobile terminal may include but is not limited to the types of the terminal 11 listed above, and the non-mobile terminal may be a server, a network attached storage (Network Attached Storage, NAS), a personal computer (personal computer, PC), a television (television, TV), an automated teller machine, or a self-service machine. This is not specifically limited in the embodiments of this application.

The apparatus provided in this embodiment of this application can implement the processes implemented in the method embodiment in FIG. 1, and achieve a same technical effect. To avoid repetition, details are not described herein again.

Optionally, as shown in FIG. 7, an embodiment of this application further provides a communication device 700, including a processor 701, a memory 702, and a program or an instruction that is stored in the memory 702 and that can be run on the processor 701. For example, when the communication device 700 is a terminal, the program or the instruction is executed by the processor 701 to implement the processes of the foregoing communication sensing method embodiment applied to the first terminal or the second terminal, and a same technical effect can be achieved. When the communication device 700 is a network side device (the first network device or the second network device), the program or the instruction is executed by the processor 701 to implement the processes of the foregoing communication sensing method embodiment applied to the first network device or the second network device, and a same technical effect can be achieved. To avoid repetition, details are not described herein again.

An embodiment of this application further provides a terminal, including a processor and a communication interface, where the communication interface is configured to obtain a measurement result corresponding to a first measurement quantity according to the sensing signal, where the first measurement quantity is a measurement quantity related to the sensing signal.

Alternatively, the communication interface is configured to send a sensing signal to a first terminal.

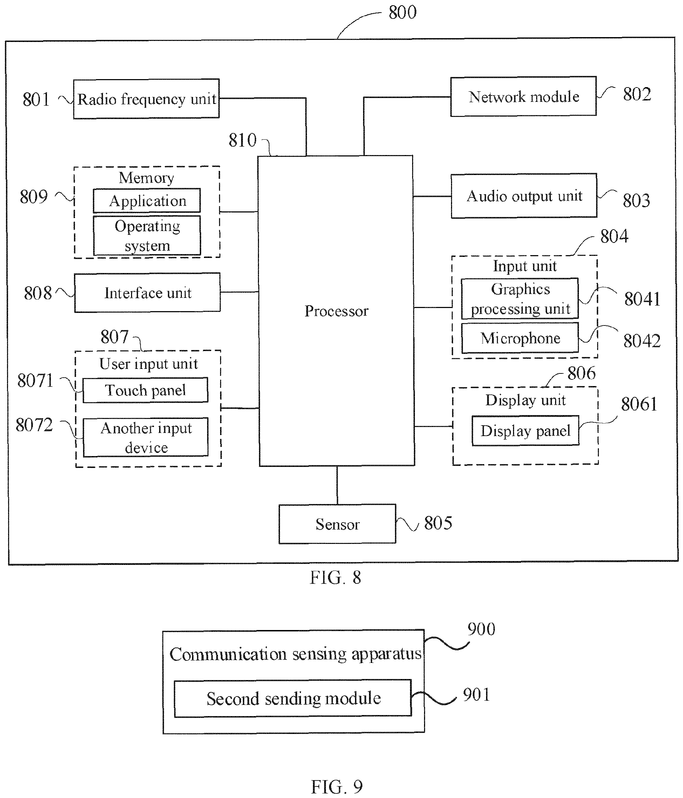

This terminal embodiment corresponds to the foregoing method embodiment on the terminal side. Each implementation process and implementation of the foregoing method embodiment may be applicable to this terminal embodiment, and a same technical effect can be achieved. Specifically, FIG. 8 is a schematic diagram of a hardware structure of a terminal according to an embodiment of this application. A terminal 800 includes but is not limited to at least a part of components such as a radio frequency unit 801, a network module 802, an audio output unit 803, an input unit 804, a sensor 805, a display unit 806, a user input unit 807, an interface unit 808, a memory 809, and a processor 810.

A person skilled in the art can understand that the terminal 800 may further include the power supply (for example, a battery) that supplies power to each component. The power supply may be logically connected to the processor 810 by using a power supply management system, so as to manage functions such as charging, discharging, and power consumption by using the power supply management system. The terminal structure shown in FIG. 8 constitutes no limitation on the terminal, and the terminal may include more or fewer components than those shown in the figure, or combine some components, or have different component arrangements. Details are not described herein.

It should be understood that, in this embodiment of this application, the input unit 804 may include a graphics processing unit (Graphics Processing Unit, GPU) 8041 and a microphone 8042, and the graphics processing unit 8041 processes image data of a still image or a video that is obtained by an image capturing apparatus (for example, a camera) in a video capturing mode or an image capturing mode. The display unit 806 may include a display panel 8061. The display panel 8061 may be configured in a form such as a liquid crystal display or an organic light-emitting diode. The user input unit 807 may include a touch panel 8071 and another input device 8072. The touch panel 8071 is also referred to as a touchscreen. The touch panel 8071 may include two parts: a touch detection apparatus and a touch controller. The another input device 8072 may include but is not limited to a physical keyboard, a functional button (such as a volume control button or a power on/off button), a trackball, a mouse, and a joystick. Details are not described herein.

In this embodiment of this application, the radio frequency unit 801 receives downlink data from a network side device and then sends the downlink data to the processor 810 for processing; and sends uplink data to the network side device. Usually, the radio frequency unit 801 includes but is not limited to an antenna, at least one amplifier, a transceiver, a coupler, a low noise amplifier, a duplexer, and the like.

The memory 809 may be configured to store a software program or an instruction and various data. The memory 809 may mainly include a program or instruction storage area and a data storage area. The program or instruction storage area may store an operating system, and an application or an instruction required by at least one function (for example, a sound playing function or an image playing function). In addition, the memory 809 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 810 may include one or more processing units. Optionally, an application processor and a modem processor may be integrated into the processor 810. The application processor mainly processes an operating system, a user interface, an application, an instruction, or the like. The modem processor mainly processes wireless communication, for example, a baseband processor. It can be understood that, alternatively, the modem processor may not be integrated into the processor 810.

In an embodiment, the radio frequency unit 801 is configured to obtain a sensing signal sent by a second terminal; and the processor 810 is configured to obtain a measurement result corresponding to a first measurement quantity according to the sensing signal, where the first measurement quantity is a measurement quantity related to the sensing signal.

Optionally, the radio frequency unit 801 is further configured to:
determine configuration information of the sensing signal; and
obtain the sensing signal according to the configuration information of the sensing signal.

Optionally, the radio frequency unit 801 is further configured to:
receive at least one of first indication information sent by a first network device, second indication information sent by a second network device, and third indication information sent by the second terminal; and
determine the configuration information of the sensing signal according to at least one of the first indication information, the second indication information, and the third indication information, where
the first indication information includes at least one of a sensing requirement, first configuration information of the sensing signal, capability information of the first network device, and recommendation configuration information of the first network device;
the second indication information includes at least one of a sensing requirement, second configuration information of the sensing signal, capability information of the second network device, and recommendation configuration information of the second network device; and
the third indication information includes at least one of a sensing requirement, third configuration information of the sensing signal, capability information of the second terminal, and recommendation configuration information of the second terminal.

Optionally, the configuration information of the sensing signal includes at least one of the following:
first configuration information, where the first configuration information is configuration information that is of the sensing signal and that is determined by the first network device;
second configuration information, where the second configuration information is configuration information that is of the sensing signal and that is determined by the second network device;
third configuration information, where the third configuration information is configuration information that is of the sensing signal and that is determined by the second terminal; and
fourth configuration information, where the fourth configuration information is configuration information that is of the sensing signal and that is determined by the first terminal.

Optionally, the fourth configuration information is determined by using at least one of the following:
the sensing requirement;
the capability information of the first network device;
the capability information of the second network device;
the recommendation configuration information of the first network device;
the recommendation configuration information of the second network device;
the capability information of the second terminal; and
the recommendation configuration information of the second terminal.

Optionally, the radio frequency unit 801 is further configured to:
after receiving at least one of the first indication information sent by the first network device, the second indication information sent by the second network device, and the third indication information sent by the second terminal, send first sensing requirement response information to at least one of the first network device, the second network device, and the second terminal in a case that it is determined, according to at least one of the first indication information, the second indication information, and the third indication information, to participate in a sensing service, where the first sensing requirement response information is used to indicate that the first terminal agrees to participate in a sensing service; or
send second sensing requirement response information to at least one of the first network device, the second network device, and the second terminal in a case that it is determined, according to at least one of the first indication information, the second indication information, and the third indication information, not to participate in a sensing service, where the second sensing requirement response information is used to indicate that the first terminal refuses to participate in a sensing service.

Optionally, the configuration information of the sensing signal includes at least one of the following:
a waveform of the sensing signal;
a subcarrier spacing of the sensing signal;
a guard interval of the sensing signal;
a bandwidth of the sensing signal;
burst duration of the sensing signal;
a time domain interval of the sensing signal;
a transmit signal power of the sensing signal;
a signal format of the sensing signal;
a signal direction of the sensing signal;
a time resource of the sensing signal;
a frequency resource of the sensing signal; and
a quasi-co-location QCL relationship of the sensing signal.

Optionally, the radio frequency unit 801 is further configured to:
obtain the first measurement quantity sent by a first network device, a second network device, or the second terminal; or
determine the first measurement quantity according to a sensing requirement.

Optionally, the radio frequency unit 801 is further configured to:
after the processor obtains the measurement result corresponding to the first measurement quantity according to the sensing signal, send the measurement result to a first network device, a second network device, or the second terminal.

Optionally, the processor 810 is further configured to:
after obtaining the measurement result corresponding to the first measurement quantity according to the sensing signal, determine a sensing result according to the measurement result; and
the radio frequency unit 801 is further configured to send the sensing result to a first network device, a second network device, or the second terminal.

Optionally, before obtaining the sensing signal sent by the second terminal, the radio frequency unit 801 is further configured to:
send fourth indication information to a first network device, a second network device, or the second terminal, where the fourth indication information includes at least one of a sensing requirement, fourth configuration information of the sensing signal, capability information of the first terminal, and recommendation configuration information of the first terminal.

Optionally, after the processor 810 obtains the measurement result corresponding to the first measurement quantity according to the sensing signal, the radio frequency unit 801 is further configured to:
obtain a target sensing result fed back by the first network device, the second network device, or the second terminal according to the fourth indication information, where
the target sensing result includes a sensing result obtained according to at least one measurement result of the first terminal.

Optionally, the first measurement quantity includes at least one of the following:
a channel matrix H;
a received signal strength indicator RSSI;
a reference signal received power RSRP;
channel state information CSI;
a power, a delay, and/or angle information of each path in a multipath channel;

Doppler spread;
a Doppler frequency shift;
a phase difference between a first antenna and a second antenna;
a delay difference between the first antenna and the second antenna;
a characteristic difference between an inphase signal and a quadrature signal; and
angle-related information.

Optionally, the sensing result includes at least one of the following:
characteristic information of a target object;
information about a target event; and
information about a target environment.

Optionally, the first network device includes a mobile and access management function AMF entity or a sensing function entity.

Optionally, the sensing function entity meets at least one of the following:
managing overall coordination and scheduling of resources required for sensing;
calculating a sensing result and estimating sensing accuracy;
verifying a sensing result and estimating sensing accuracy;
supporting an immediate sensing request;
supporting a delay sensing request;
supporting a periodic or event-triggered sensing request;
supporting cancellation of a periodic or triggering sensing behavior;
corresponding to at least one AMF entity; and
determining a sensing method according to at least one of a type of a sensing client, sensing QoS, a sensing capability of a terminal, and a sensing capability of a network device, where the sensing method includes at least one of the following: sending, by the first network node, the sensing signal, and receiving, by the second network node, the sensing signal; sending and receiving, by the first network node, the sensing signal; sending, by the first network node, the sensing signal, and receiving, by a terminal device associated with the first network node, the sensing signal; sending, by the terminal device, the sensing signal, and receiving, by the second terminal, the sensing signal; sending and receiving, by the terminal device, the sensing signal; and sending, by the terminal device, the sensing signal, and receiving, by the first network node, the sensing signal.

In another embodiment, the radio frequency unit 801 is configured to send a sensing signal to a first terminal.

Optionally, the radio frequency unit 801 is further configured to:
determine configuration information of the sensing signal; and
send the sensing signal according to the configuration information of the sensing signal.

Optionally, the radio frequency unit 801 is further configured to:
receive at least one of first indication information sent by a first network device, second indication information sent by a second network device, and fourth indication information sent by the first terminal; and
determine the configuration information of the sensing signal according to at least one of the first indication information, the second indication information, and the fourth indication information, where
the first indication information includes at least one of a sensing requirement, first configuration information of the sensing signal, capability information of the first network device, and recommendation configuration information of the first network device;
the second indication information includes at least one of a sensing requirement, second configuration information of the sensing signal, capability information of the second network device, and recommendation configuration information of the second network device; and
the fourth indication information includes at least one of a sensing requirement, fourth configuration information of the sensing signal, capability information of the first terminal, and recommendation configuration information of the first terminal.

Optionally, the configuration information of the sensing signal includes at least one of the following:
first configuration information, where the first configuration information is configuration information that is of the sensing signal and that is determined by the first network device;
second configuration information, where the second configuration information is configuration information that is of the sensing signal and that is determined by the second network device;
third configuration information, where the third configuration information is configuration information that is of the sensing signal and that is determined by the second terminal; and
fourth configuration information, where the fourth configuration information is configuration information that is of the sensing signal and that is determined by the first terminal.

Optionally, the third configuration information is determined by using at least one of the following:
the sensing requirement;
the capability information of the first network device;
the capability information of the second network device;
the recommendation configuration information of the first network device;
the recommendation configuration information of the second network device;
the capability information of the first terminal; and
the recommendation configuration information of the first terminal.

Optionally, after receiving at least one of the first indication information sent by the first network device, the second indication information sent by the second network device, and the fourth indication information sent by the first terminal, the radio frequency unit 801 is further configured to: send third sensing requirement response information to at least one of the first network device, the second network device, and the first terminal in a case that it is determined, according to at least one of the first indication information, the second indication information, and the fourth indication information, to participate in a sensing service, where the third sensing requirement response information is used to indicate that the second terminal agrees to participate in a sensing service; or
send fourth sensing requirement response information to at least one of the first network device, the second network device, and the first terminal in a case that it is determined, according to at least one of the first indication information, the second indication information, and the fourth indication information, not to participate in a sensing service, where the fourth sensing requirement response information is used to indicate that the second terminal refuses to participate in a sensing service.

Optionally, the configuration information of the sensing signal includes at least one of the following:
a waveform of the sensing signal;
a subcarrier spacing of the sensing signal;
a guard interval of the sensing signal;
a bandwidth of the sensing signal;
burst duration of the sensing signal;
a time domain interval of the sensing signal;
a transmit signal power of the sensing signal;
a signal format of the sensing signal;
a signal direction of the sensing signal;
a time resource of the sensing signal;
a frequency resource of the sensing signal; and
a quasi-co-location QCL relationship of the sensing signal.

Optionally, the radio frequency unit 801 is further configured to:
obtain a first measurement quantity sent by a first network device, a second network device, or the first terminal; or
determine the first measurement quantity according to a sensing requirement.

Optionally, after sending the sensing signal to the first terminal, the radio frequency unit 801 is further configured to:
obtain a measurement result sent by the first terminal, where the measurement result is a measurement result that is corresponding to a first measurement quantity and that is obtained by the first terminal according to the sensing signal, and the first measurement quantity is a measurement quantity related to the sensing signal; and
determine a sensing result according to the measurement result, or send the measurement result to the second terminal, a first network device, or a second network device.

Optionally, after the processor determines the sensing result according to the measurement result, the radio frequency unit 801 is further configured to:
send the sensing result to the first network device, the second network device, or the first terminal.

Optionally, before sending the sensing signal to the first terminal, the radio frequency unit 801 is further configured to:
send third indication information to a first network device, a second network device, or the first terminal, where the third indication information includes at least one of a sensing requirement, third configuration information of the sensing signal, capability information of the second terminal, and recommendation configuration information of the second terminal.

Optionally, the radio frequency unit 801 is further configured to:
obtain a target sensing result fed back by the first network device, the second network device, or the first terminal according to the third indication information, where
the target sensing result includes a sensing result obtained according to at least one measurement result of the first terminal.

Optionally, the first measurement quantity includes at least one of the following:
a channel matrix H;
a received signal strength indicator RSSI;
a reference signal received power RSRP;
channel state information CSI;
a power, a delay, and/or angle information of each path in a multipath channel;

Doppler spread;
a Doppler frequency shift;
a phase difference between a first antenna and a second antenna;
a delay difference between the first antenna and the second antenna;
a characteristic difference between an inphase signal and a quadrature signal; and
angle-related information.

Optionally, the sensing result includes at least one of the following:
characteristic information of a target object;
information about a target event; and
information about a target environment.

Optionally, the first network device includes a mobile and access management function AMF entity or a sensing function entity.

Optionally, the sensing function entity meets at least one of the following:
managing overall coordination and scheduling of resources required for sensing;
calculating a sensing result and estimating sensing accuracy;
verifying a sensing result and estimating sensing accuracy;
supporting an immediate sensing request;
supporting a delay sensing request;
supporting a periodic or event-triggered sensing request;
supporting cancellation of a periodic or triggering sensing behavior;
corresponding to at least one AMF entity; and
determining a sensing method according to at least one of a type of a sensing client, sensing QoS, a sensing capability of a terminal, and a sensing capability of a network device, where the sensing method includes at least one of the following: sending, by the first network node, the sensing signal, and receiving, by the second network node, the sensing signal; sending and receiving, by the first network node, the sensing signal; sending, by the first network node, the sensing signal, and receiving, by a terminal device associated with the first network node, the sensing signal; sending, by the terminal device, the sensing signal, and receiving, by the second terminal, the sensing signal; sending and receiving, by the terminal device, the sensing signal; and sending, by the terminal device, the sensing signal, and receiving, by the first network node, the sensing signal.

In this embodiment of this application, a first terminal obtains a sensing signal sent by a second terminal, and the first terminal obtains a measurement result corresponding to a first measurement quantity according to the sensing signal, where the first measurement quantity is a measurement quantity related to the sensing signal. In this way, communication sensing is implemented through reception and transmission of a sensing signal by a terminal.

As shown in FIG. 9, an embodiment of this application further provides a communication sensing apparatus 900, including:
a second sending module 901, configured to send first indication information to a first terminal and/or a second terminal, where the first indication information is used to instruct the second terminal to send a sensing signal; and/or the first indication information is used to instruct the first terminal to receive a sensing signal, and obtain a measurement result corresponding to a first measurement quantity according to the sensing signal, where the first measurement quantity is a measurement quantity related to the sensing signal, and a target terminal includes at least one terminal.

Optionally, the apparatus in this embodiment of this application further includes:
a determining module, configured to determine the first indication information.

Optionally, the first indication information includes at least one of the following:
a sensing requirement;
first configuration information of the sensing signal;
capability information of the first network device; and
recommendation configuration information of the first network device.

Optionally, the apparatus in this embodiment of this application further includes:
a second receiving module, configured to: after the second sending module sends the first indication information to the target terminal, receive sensing requirement response information sent by the first terminal, the second terminal, or a second network device, where
the sensing requirement response information includes fifth sensing requirement response information or sixth sensing requirement response information;
the fifth sensing requirement response information is used to indicate that the first terminal or the second terminal agrees to participate in a sensing service; and
the sixth sensing requirement response information is used to indicate that the first terminal or the second terminal refuses to participate in a sensing service.

Optionally, the apparatus in this embodiment of this application further includes:
a third receiving module, configured to: before the second sending module sends the first indication information to the first terminal and/or the second terminal, receive first target indication information, where the first target indication information includes at least one of second indication information sent by a second network device, third indication information sent by the second terminal, fourth indication information sent by the first terminal, and fifth indication information sent by an application server, where the second indication information includes at least one of a sensing requirement, second configuration information of the sensing signal, capability information of the second network device, and recommendation configuration information of the second network device, the third indication information includes at least one of a sensing requirement, third configuration information of the sensing information, capability information of the second terminal, and recommendation configuration information of the second terminal, the fourth indication information includes at least one of a sensing requirement, fourth configuration information of the sensing information, capability information of the first terminal, and recommendation configuration information of the first terminal, and the fifth indication information includes a sensing requirement; and
a second determining module, configured to determine the first configuration information according to the first target indication information.

Optionally, the second determining module determines the first configuration information by using at least one of the following:
the sensing requirement;
the capability information of the first terminal;
the capability information of the second network device;
the recommendation configuration information of the first terminal;
the recommendation configuration information of the second network device;
the capability information of the second terminal; and
the recommendation configuration information of the second terminal.

Optionally, the apparatus in this embodiment of this application further includes:
a third determining module, configured to determine a terminal associated with the sensing requirement as the target terminal, where the target terminal includes the first terminal and/or the second terminal.

Optionally, the apparatus in this embodiment of this application further includes:
an eighth obtaining module, configured to: after the third determining module determines the terminal associated with the sensing requirement as the target terminal, obtain the measurement result sent by the target terminal or a target second network device, where the target second network device is a second network device associated with a second sensing requirement; and
a fourth determining module, configured to determine a target sensing result according to the measurement result.

Optionally, the apparatus in this embodiment of this application further includes:
a ninth obtaining module, configured to obtain a target sensing result sent by the first terminal, the second terminal, or a target second network device, where the target sensing result is obtained according to the measurement result.

Optionally, the first terminal and/or the second terminal are/is determined by using at least one of the following:
whether the terminal sends a sensing requirement;
capability-related information reported by the terminal to the first network device;
information that is fed back by the terminal to the first network device and that is about agreeing to or refusing to participate in a sensing service;
information about whether the terminal participates in a sensing service as agreed in advance;
whether the terminal that participates in a sensing service feeds back sensing response information corresponding to a sensing requirement within a specified time;
prior information of the terminal, where the prior information of the terminal includes at least one of a location of the terminal and an area in which the terminal is located; and
information about a base station connected to the terminal.

Optionally, the apparatus in this embodiment of this application further includes:
a seventh sending module, configured to send the first indication information to a target second network device associated with a sensing requirement.

Optionally, the target second network device is determined by using at least one of the following:
whether the second network device initiates a second sensing requirement;
information about a terminal connected to the second network device;
capability-related information reported by the second network device to a core network; and
prior information of the second network device, where the prior information of the second network device includes at least one of a location of a base station and an area in which the base station is located.

Optionally, the apparatus in this embodiment of this application further includes:
an eighth sending module, configured to send the first measurement quantity to the target second network device.

Optionally, the apparatus in this embodiment of this application further includes:
a ninth sending module, configured to send the first measurement quantity to the first terminal and/or the second terminal.

Optionally, first configuration information of the sensing signal includes at least one of the following:
a waveform of the sensing signal;
a subcarrier spacing of the sensing signal;
a guard interval of the sensing signal;
a bandwidth of the sensing signal;
burst duration of the sensing signal;
a time domain interval of the sensing signal;
a transmit signal power of the sensing signal;
a signal format of the sensing signal;
a signal direction of the sensing signal;
a time resource of the sensing signal;
a frequency resource of the sensing signal; and
a quasi-co-location QCL relationship of the sensing signal.

Optionally, the first network device includes a mobile and access management function AMF entity or a sensing function entity.

Optionally, the sensing function entity meets at least one of the following:
managing overall coordination and scheduling of resources required for sensing;
calculating a sensing result and estimating sensing accuracy;
verifying a sensing result and estimating sensing accuracy;
supporting an immediate sensing request;
supporting a delay sensing request;
supporting a periodic or event-triggered sensing request;
supporting cancellation of a periodic or triggering sensing behavior;
corresponding to at least one AMF entity; and
determining a sensing method according to at least one of a type of a sensing client, sensing QoS, a sensing capability of a terminal, and a sensing capability of a network device, where the sensing method includes at least one of the following: sending, by the first network node, the sensing signal, and receiving, by the second network node, the sensing signal; sending and receiving, by the first network node, the sensing signal; sending, by the first network node, the sensing signal, and receiving, by a terminal device associated with the first network node, the sensing signal; sending, by the terminal device, the sensing signal, and receiving, by the second terminal, the sensing signal; sending and receiving, by the terminal device, the sensing signal; and sending, by the terminal device, the sensing signal, and receiving, by the first network node, the sensing signal.

In this embodiment of this application, first indication information is sent to a first terminal and/or a second terminal. The first terminal sends a sensing signal according to the first indication information, and the second terminal receives the sensing signal and obtains a measurement result corresponding to a first measurement quantity, where the first measurement quantity is a measurement quantity related to the sensing signal. In this way, communication sensing is implemented through reception and transmission of a sensing signal by a terminal.

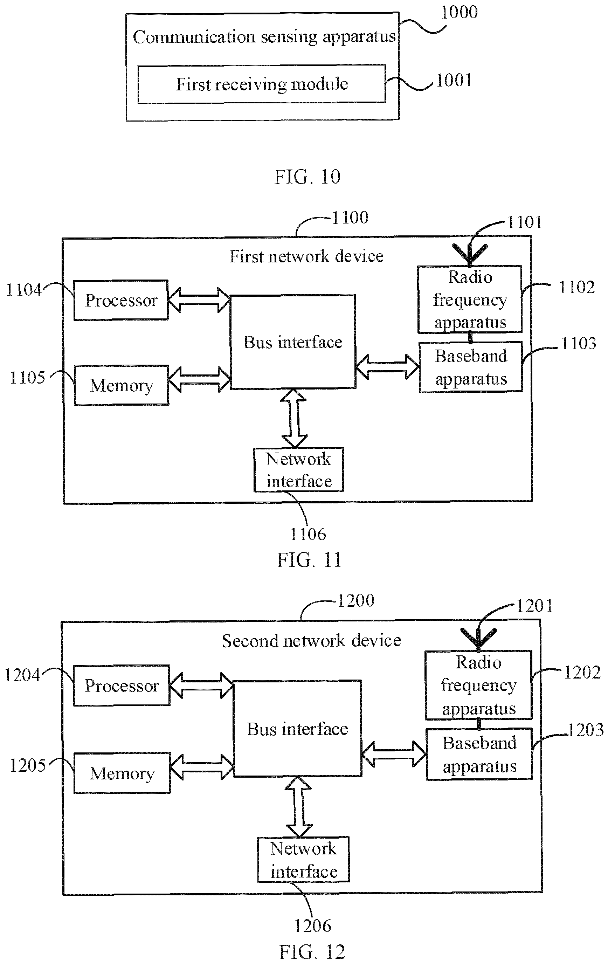

As shown in FIG. 10, an embodiment of this application further provides a communication sensing apparatus 1000, including:
a first receiving module 1001, configured to receive first indication information, where the first indication information is used to instruct a second terminal to send a sensing signal; and/or the first indication information is used to instruct a first terminal to receive a sensing signal, and obtain a measurement result corresponding to a first measurement quantity according to the sensing signal, where the first measurement quantity is a measurement quantity related to the sensing signal.

Optionally, the first indication information includes at least one of the following:
a sensing requirement;
first configuration information of the sensing signal;
capability information of a first network device; and
recommendation configuration information of the first network device.

Optionally, the apparatus in this embodiment of this application further includes:
a fourth receiving module, configured to receive sensing requirement response information sent by the first terminal or the second terminal; and
a tenth sending module, configured to send the sensing requirement response information to a first network device, where
the sensing requirement response information includes fifth sensing requirement response information or sixth sensing requirement response information;
the fifth sensing requirement response information is used to indicate that the first terminal or the second terminal agrees to participate in a sensing service; and
the sixth sensing requirement response information is used to indicate that the first terminal or the second terminal refuses to participate in a sensing service.

Optionally, the apparatus in this embodiment of this application further includes:
a fifth determining module, configured to determine second configuration information of the sensing signal according to second target indication information, where the second target indication information includes at least one of the first indication information, third indication information sent by the second terminal, and fourth indication information sent by the first terminal;
the third indication information includes at least one of a sensing requirement, third configuration information of the sensing signal, capability information of the second terminal, and recommendation configuration information of the second terminal; and
the fourth indication information includes at least one of a sensing requirement, fourth configuration information of the sensing signal, capability information of the first terminal, and recommendation configuration information of the first terminal.

Optionally, the apparatus in this embodiment of this application further includes:
a fifth receiving module, configured to: before the fifth determining module determines the second configuration information of the sensing signal according to the second target indication information, receive at least one of the third indication information and the fourth indication information.

Optionally, the fifth determining module determines the second configuration information of the sensing signal according to at least one of the following:
the capability information of the first terminal;
the capability information of the first network device;
the recommendation configuration information of the first terminal;
the recommendation configuration information of the first network device;
the capability information of the second terminal; and
the recommendation configuration information of the second terminal.

Optionally, the apparatus in this embodiment of this application further includes:
an eleventh sending module, configured to send the second configuration information of the sensing signal to at least one of the first terminal, the second terminal, and the first network device.

Optionally, the second configuration information of the sensing signal includes at least one of the following:
a waveform of the sensing signal;
a subcarrier spacing of the sensing signal;
a guard interval of the sensing signal;
a bandwidth of the sensing signal;
burst duration of the sensing signal;
a time domain interval of the sensing signal;
a transmit signal power of the sensing signal;
a signal format of the sensing signal;
a signal direction of the sensing signal;
a time resource of the sensing signal;
a frequency resource of the sensing signal; and
a quasi-co-location QCL relationship of the sensing signal.

Optionally, the apparatus in this embodiment of this application further includes:
a twelfth sending module, configured to: before the first receiving module receives the first indication information, send second indication information to a first network device, the first terminal, or the second terminal, where the second indication information includes at least one of capability information of the second network device, a sensing requirement, second configuration information of the sensing signal, and recommendation configuration information of the second network.

Optionally, the apparatus in this embodiment of this application further includes:
a tenth obtaining module, configured to obtain a target sensing result fed back by the first network device, the first terminal, or the second terminal according to the second indication information, where the target sensing result is obtained according to the measurement result.

Optionally, the apparatus in this embodiment of this application further includes:
an eleventh obtaining module, configured to obtain the measurement result; and
a third determining module, configured to determine a target sensing result according to the measurement result.

Optionally, the apparatus in this embodiment of this application further includes:
a thirteenth sending module, configured to send the target sensing result to a first network device, the first terminal, or the second terminal.

In this embodiment of this application, first indication information is received, and the first indication information is forwarded to a first terminal and/or a second terminal, or second configuration information of a sensing signal is determined according to the first indication information, and is sent to a first terminal and/or a second terminal, so that the second terminal sends the sensing signal, and the first terminal receives the sensing signal and obtains a measurement result corresponding to a first measurement quantity according to the sensing signal. In this way, communication sensing is implemented through reception and transmission of a sensing signal by a terminal.

An embodiment of this application further provides a network device. The network device may be the foregoing first network device or the second network device. The network device includes a processor and a communication interface. When the network device is the foregoing first network device, the communication interface is configured to send first indication information to a first terminal and/or a second terminal, where the first indication information is used to instruct the second terminal to send a sensing signal; and/or the first indication information is used to instruct the first terminal to receive a sensing signal, and obtain a measurement result corresponding to a first measurement quantity according to the sensing signal, where the first measurement quantity is a measurement quantity related to the sensing signal, and a target terminal includes at least one terminal. When the network device is the second network device, the communication interface is configured to receive first indication information, where the first indication information is used to instruct a second terminal to send a sensing signal; and/or the first indication information is used to instruct a first terminal to receive a sensing signal, and obtain a measurement result corresponding to a first measurement quantity according to the sensing signal, where the first measurement quantity is a measurement quantity related to the sensing signal. This network device embodiment corresponds to the foregoing method embodiment on the network device. Each implementation process and implementation of the foregoing method embodiment may be applicable to this network device embodiment, and a same technical effect can be achieved.

Specifically, an embodiment of this application further provides a network device. Optionally, the network device is the foregoing first network device. As shown in FIG. 11, a network device 1100 includes an antenna 1101, a radio frequency apparatus 1102, and a baseband apparatus 1103. The antenna 1101 is connected to the radio frequency apparatus 1102. In an uplink direction, the radio frequency apparatus 1102 receives information by using the antenna 1101, and sends the received information to the baseband apparatus 1103 for processing. In a downlink direction, the baseband apparatus 1103 processes to-be-sent information, and sends the information to the radio frequency apparatus 1102. The radio frequency apparatus 1102 processes the received information and then sends the information through the antenna 1101.

The band processing apparatus may be located in the baseband apparatus 1103. In the foregoing embodiment, the method performed by the network device may be implemented in the baseband apparatus 1103. The baseband apparatus 1103 includes a processor 1104 and a memory 1105.

For example, the baseband apparatus 1103 may include at least one baseband board. A plurality of chips are disposed on the baseband board. As shown in FIG. 11, one chip, for example, the processor 1104, is connected to the memory 1105, to invoke a program in the memory 1105 to perform the operations of the first network device shown in the foregoing method embodiment.

The baseband apparatus 1103 may further include a network interface 1106, configured to exchange information with the radio frequency apparatus 1102. For example, the interface is a common public radio interface (common public radio interface, CPRI for short).

Specifically, the network device (the first network device) in this embodiment of this application further includes an instruction or a program that is stored in the memory 1105 and that can be run on the processor 1104. The processor 1104 invokes the instruction or the program in the memory 1105 to perform the method performed by the modules shown in FIG. 9, and a same technical effect is achieved. To avoid repetition, details are not described herein again.

An embodiment of this application further provides a network device. The network device may be specifically the foregoing second network device. As shown in FIG. 12, the network side device includes a baseband apparatus 1203. The baseband apparatus 1203 processes to-be-sent information.

The band processing apparatus may be located in the baseband apparatus 1203. In the foregoing embodiment, the method performed by the network side device may be implemented in the baseband apparatus 1203. The baseband apparatus 1203 includes a processor 1204 and a memory 1205.

For example, the baseband apparatus 1203 may include at least one baseband board. A plurality of chips are disposed on the baseband board. As shown in FIG. 12, one chip, for example, the processor 1204, is connected to the memory 1205, to invoke a program in the memory 1205 to perform the operations of the second network device shown in the foregoing method embodiment.

The baseband apparatus 1203 may further include a network interface 1206, configured to exchange information with the radio frequency apparatus 1202. For example, the interface is a common public radio interface (common public radio interface, CPRI for short).

Specifically, the network device (the second network device) in this embodiment of this application further includes an instruction or a program that is stored in the memory 1205 and that can be run on the processor 1204. The processor 1204 invokes the instruction or the program in the memory 1205 to perform the method performed by the modules shown in FIG. 10, and a same technical effect is achieved. To avoid repetition, details are not described herein again.

An embodiment of this application further provides a readable storage medium. The readable storage medium stores a program or an instruction, and the program or the instruction is executed by a processor to implement the processes of the foregoing communication sensing method embodiment, and a same technical effect can be achieved. To avoid repetition, details are not described herein again.

The processor is a processor in the terminal in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip. The chip includes a processor and a communication interface, the communication interface is coupled to the processor, and the processor is configured to run a program or an instruction to implement the processes of the foregoing communication sensing method embodiment, and a same technical effect can be achieved. To avoid repetition, details are not described herein again.

It should be understood that the chip mentioned in this embodiment of this application may also be referred to as a system-level chip, a system chip, a chip system, or an on-chip system chip.

An embodiment of this application further provides a computer program product. The computer program product is stored in a non-transient storage medium, and the computer program product is executed by at least one processor to implement the processes of the foregoing communication sensing method embodiment, and a same technical effect can be achieved. To avoid repetition, details are not described herein again.

It should be noted that, in this specification, the terms "include", "comprise", or their any other variant are intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "including a ..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a computer software product. The computer software product is stored in a storage medium (such as a ROM/RAM, a hard disk, or an optical disc), and includes several instructions for instructing a terminal (which may be mobile phone, a computer, a server, a network device, or the like) to perform the methods described in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

## Claims

1. A communication sensing method, comprising:
obtaining, by a first terminal, a sensing signal sent by a second terminal; and
obtaining, by the first terminal, a measurement result corresponding to a first measurement quantity according to the sensing signal, wherein the first measurement quantity is a measurement quantity related to the sensing signal.

2. The method according to claim 1, wherein the obtaining, by a first terminal, a sensing signal sent by a second terminal comprises:
determining configuration information of the sensing signal; and
obtaining the sensing signal according to the configuration information of the sensing signal.

3. The method according to claim 2, wherein the determining configuration information of the sensing signal comprises:
receiving at least one of first indication information sent by a first network device, second indication information sent by a second network device, and third indication information sent by the second terminal; and
determining the configuration information of the sensing signal according to at least one of the first indication information, the second indication information, and the third indication information, wherein
the first indication information comprises at least one of a sensing requirement, first configuration information of the sensing signal, capability information of the first network device, and recommendation configuration information of the first network device;
the second indication information comprises at least one of a sensing requirement, second configuration information of the sensing signal, capability information of the second network device, and recommendation configuration information of the second network device; and
the third indication information comprises at least one of a sensing requirement, third configuration information of the sensing signal, capability information of the second terminal, and recommendation configuration information of the second terminal.

4. The method according to claim 3, wherein the configuration information of the sensing signal comprises at least one of the following:
first configuration information, wherein the first configuration information is configuration information that is of the sensing signal and that is determined by the first network device;
second configuration information, wherein the second configuration information is configuration information that is of the sensing signal and that is determined by the second network device;
third configuration information, wherein the third configuration information is configuration information that is of the sensing signal and that is determined by the second terminal; and
fourth configuration information, wherein the fourth configuration information is configuration information that is of the sensing signal and that is determined by the first terminal.

5. The method according to claim 4, wherein the first terminal determines the fourth configuration information by using at least one of the following:
the sensing requirement;
the capability information of the first network device;
the capability information of the second network device;
the recommendation configuration information of the first network device;
the recommendation configuration information of the second network device;
the capability information of the second terminal; and
the recommendation configuration information of the second terminal.

6. The method according to claim 3, wherein after the receiving at least one of first indication information sent by a first network device, second indication information sent by a second network device, and third indication information sent by the second terminal, the method further comprises:
sending first sensing requirement response information to at least one of the first network device, the second network device, and the second terminal in a case that it is determined, according to at least one of the first indication information, the second indication information, and the third indication information, to participate in a sensing service, wherein the first sensing requirement response information is used to indicate that the first terminal agrees to participate in a sensing service; or
sending second sensing requirement response information to at least one of the first network device, the second network device, and the second terminal in a case that it is determined, according to at least one of the first indication information, the second indication information, and the third indication information, not to participate in a sensing service, wherein the second sensing requirement response information is used to indicate that the first terminal refuses to participate in a sensing service.

7. The method according to claim 2, wherein the configuration information of the sensing signal comprises at least one of the following:
a waveform of the sensing signal;
a subcarrier spacing of the sensing signal;
a guard interval of the sensing signal;
a bandwidth of the sensing signal;
burst duration of the sensing signal;
a time domain interval of the sensing signal;
a transmit signal power of the sensing signal;
a signal format of the sensing signal;
a signal direction of the sensing signal;
a time resource of the sensing signal;
a frequency resource of the sensing signal; and
a quasi-co-location QCL relationship of the sensing signal.

8. The method according to claim 1, further comprising:
obtaining, by the first terminal, the first measurement quantity sent by a first network device, a second network device, or the second terminal; or
determining the first measurement quantity according to a sensing requirement.

9. The method according to claim 1, wherein after the obtaining a measurement result corresponding to a first measurement quantity according to the sensing signal, the method further comprises:
sending, by the first terminal, the measurement result to a first network device, a second network device, or the second terminal.

10. The method according to claim 1, wherein after the obtaining a measurement result corresponding to a first measurement quantity according to the sensing signal, the method further comprises:
determining, by the first terminal, a sensing result according to the measurement result;
and
sending the sensing result to a first network device, a second network device, or the second terminal.

11. The method according to claim 1, wherein before the obtaining, by a first terminal, a sensing signal sent by a second terminal, the method further comprises:
sending fourth indication information to a first network device, a second network device, or the second terminal, wherein the fourth indication information comprises at least one of a sensing requirement, fourth configuration information of the sensing signal, capability information of the first terminal, and recommendation configuration information of the first terminal.

12. The method according to claim 11, wherein after the obtaining, by the first terminal, a measurement result corresponding to a first measurement quantity according to the sensing signal, the method further comprises:
obtaining a target sensing result fed back by the first network device, the second network device, or the second terminal according to the fourth indication information, wherein
the target sensing result comprises a sensing result obtained according to at least one measurement result of the first terminal.

13. The method according to claim 1, wherein the first measurement quantity comprises at least one of the following:
a channel matrix H;
a received signal strength indicator RSSI;
a reference signal received power RSRP;
channel state information CSI;
a power, a delay, and/or angle information of each path in a multipath channel;
Doppler spread;
a Doppler frequency shift;
a phase difference between a first antenna and a second antenna;
a delay difference between the first antenna and the second antenna;
a characteristic difference between an inphase signal and a quadrature signal; and
angle-related information.

14. The method according to claim 10 or 12, wherein the sensing result comprises at least one of the following:
characteristic information of a target object;
information about a target event; and
information about a target environment.

15. The method according to claim 3, 4, 5, 6, 8, 9, 10, 11 or 12, wherein the first network device comprises a mobile and access management function AMF entity or a sensing function entity.

16. The method according to claim 15, wherein the sensing function entity meets at least one of the following:
managing overall coordination and scheduling of resources required for sensing;
calculating a sensing result and estimating sensing accuracy;
verifying a sensing result and estimating sensing accuracy;
supporting an immediate sensing request;
supporting a delay sensing request;
supporting a periodic or event-triggered sensing request;
supporting cancellation of a periodic or triggering sensing behavior;
corresponding to at least one AMF entity; and
determining a sensing method according to at least one of a type of a sensing client, sensing QoS, a sensing capability of a terminal, and a sensing capability of a network device, wherein the sensing method comprises at least one of the following: sending, by the first network node, the sensing signal, and receiving, by the second network node, the sensing signal; sending and receiving, by the first network node, the sensing signal; sending, by the first network node, the sensing signal, and receiving, by a terminal device associated with the first network node, the sensing signal; sending, by the terminal device, the sensing signal, and receiving, by the second terminal, the sensing signal; sending and receiving, by the terminal device, the sensing signal; and sending, by the terminal device, the sensing signal, and receiving, by the first network node, the sensing signal.

17. A communication sensing method, comprising:
sending, by a second terminal, a sensing signal to a first terminal.

18. The method according to claim 17, wherein the sending, by a second terminal, a sensing signal to a first terminal comprises:
determining configuration information of the sensing signal; and
sending the sensing signal according to the configuration information of the sensing signal.

19. The method according to claim 18, wherein the determining configuration information of the sensing signal comprises:
receiving first indication information sent by a first network device, second indication information sent by a second network device, and/or fourth indication information sent by the first terminal; and
determining the configuration information of the sensing signal in a case that it is determined, according to the first indication information, the second indication information, and/or the fourth indication information, to participate in a sensing service, wherein
the first indication information comprises at least one of a sensing requirement, first configuration information of the sensing signal, capability information of the first network device, and recommendation configuration information of the first network device;
the second indication information comprises at least one of a sensing requirement, second configuration information of the sensing signal, capability information of the second network device, and recommendation configuration information of the second network device; and
the fourth indication information comprises at least one of a sensing requirement, fourth configuration information of the sensing signal, capability information of the first terminal, and recommendation configuration information of the first terminal.

20. The method according to claim 19, wherein the configuration information of the sensing signal comprises at least one of the following:
first configuration information, wherein the first configuration information is configuration information that is of the sensing signal and that is determined by the first network device;
second configuration information, wherein the second configuration information is configuration information that is of the sensing signal and that is determined by the second network device;
third configuration information, wherein the third configuration information is configuration information that is of the sensing signal and that is determined by the second terminal; and
fourth configuration information, wherein the fourth configuration information is configuration information that is of the sensing signal and that is determined by the first terminal.

21. The method according to claim 20, wherein the second terminal determines the third configuration information by using at least one of the following:
the sensing requirement;
the capability information of the first network device;
the capability information of the second network device;
the recommendation configuration information of the first network device;
the recommendation configuration information of the second network device;
the capability information of the first terminal; and
the recommendation configuration information of the first terminal.

22. The method according to claim 19, wherein after the receiving at least one of first indication information sent by a first network device, second indication information sent by a second network device, and fourth indication information sent by the first terminal, the method further comprises:
sending third sensing requirement response information to at least one of the first network device, the second network device, and the first terminal in a case that it is determined, according to at least one of the first indication information, the second indication information, and the fourth indication information, to participate in a sensing service, wherein the third sensing requirement response information is used to indicate that the second terminal agrees to participate in a sensing service; or
sending fourth sensing requirement response information to at least one of the first network device, the second network device, and the first terminal in a case that it is determined, according to at least one of the first indication information, the second indication information, and the fourth indication information, not to participate in a sensing service, wherein the fourth sensing requirement response information is used to indicate that the second terminal refuses to participate in a sensing service.

23. The method according to claim 18, wherein the configuration information of the sensing signal comprises at least one of the following:
a waveform of the sensing signal;
a subcarrier spacing of the sensing signal;
a guard interval of the sensing signal;
a bandwidth of the sensing signal;
burst duration of the sensing signal;
a time domain interval of the sensing signal;
a transmit signal power of the sensing signal;
a signal format of the sensing signal;
a signal direction of the sensing signal;
a time resource of the sensing signal;
a frequency resource of the sensing signal; and
a quasi-co-location QCL relationship of the sensing signal.

24. The method according to claim 17, further comprising:
obtaining, by the second terminal, a first measurement quantity sent by a first network device, a second network device, or the first terminal; or
determining the first measurement quantity according to a sensing requirement.

25. The method according to claim 17, wherein after the sending, by a second terminal, a sensing signal to a first terminal, the method further comprises:
obtaining a measurement result sent by the first terminal, wherein the measurement result is a measurement result that is corresponding to a first measurement quantity and that is obtained by the first terminal according to the sensing signal, and the first measurement quantity is a measurement quantity related to the sensing signal; and
determining a sensing result according to the measurement result, or sending the measurement result to the second terminal, a first network device, or a second network device.

26. The method according to claim 25, wherein after the determining a sensing result according to the measurement result, the method further comprises:
sending the sensing result to the first network device, the second network device, or the first terminal.

27. The method according to claim 17, wherein before the sending, by a second terminal, a sensing signal to a first terminal, the method further comprises:
sending third indication information to a first network device, a second network device, or the first terminal, wherein the third indication information comprises at least one of a sensing requirement, third configuration information of the sensing signal, capability information of the second terminal, and recommendation configuration information of the second terminal.

28. The method according to claim 27, further comprising:
obtaining a target sensing result fed back by the first network device, the second network device, or the first terminal according to the third indication information, wherein
the target sensing result comprises a sensing result obtained according to at least one measurement result of the first terminal.

29. The method according to claim 17, wherein the first measurement quantity comprises at least one of the following:
a channel matrix H;
a received signal strength indicator RSSI;
a reference signal received power RSRP;
channel state information CSI;
a power, a delay, and/or angle information of each path in a multipath channel;
Doppler spread;
a Doppler frequency shift;
a phase difference between a first antenna and a second antenna;
a delay difference between the first antenna and the second antenna;
a characteristic difference between an inphase signal and a quadrature signal; and
angle-related information.

30. The method according to claim 25, 26, or 28, wherein the sensing result comprises at least one of the following:
characteristic information of a target object;
information about a target event; and
information about a target environment.

31. The method according to claim 19, 20, 21, 22, 24, 25, 26, 27, or 28, wherein the first network device comprises a mobile and access management function AMF entity or a sensing function entity.

32. The method according to claim 31, wherein the sensing function entity meets at least one of the following:
managing overall coordination and scheduling of resources required for sensing;
calculating a sensing result and estimating sensing accuracy;
verifying a sensing result and estimating sensing accuracy;
supporting an immediate sensing request;
supporting a delay sensing request;
supporting a periodic or event-triggered sensing request;
supporting cancellation of a periodic or triggering sensing behavior;
corresponding to at least one AMF entity; and
determining a sensing method according to at least one of a type of a sensing client, sensing QoS, a sensing capability of a terminal, and a sensing capability of a network device, wherein the sensing method comprises at least one of the following: sending, by the first network node, the sensing signal, and receiving, by the second network node, the sensing signal; sending and receiving, by the first network node, the sensing signal; sending, by the first network node, the sensing signal, and receiving, by a terminal device associated with the first network node, the sensing signal; sending, by the terminal device, the sensing signal, and receiving, by the second terminal, the sensing signal; sending and receiving, by the terminal device, the sensing signal; and sending, by the terminal device, the sensing signal, and receiving, by the first network node, the sensing signal.

33. A communication sensing method, comprising:
sending, by a first network device, first indication information to a first terminal and/or a second terminal, wherein the first indication information is used to instruct the second terminal to send a sensing signal; and/or the first indication information is used to instruct the first terminal to receive a sensing signal, and obtain a measurement result corresponding to a first measurement quantity according to the sensing signal, wherein the first measurement quantity is a measurement quantity related to the sensing signal, and a target terminal comprises at least one terminal.

34. The method according to claim 33, wherein the first indication information comprises at least one of the following:
a sensing requirement;
first configuration information of the sensing signal;
capability information of the first network device; and
recommendation configuration information of the first network device.

35. The method according to claim 33, wherein after the sending, by a first network device, first indication information to a target terminal, the method further comprises:
receiving sensing requirement response information sent by the first terminal, the second terminal, or a second network device, wherein
the sensing requirement response information comprises fifth sensing requirement response information or sixth sensing requirement response information;
the fifth sensing requirement response information is used to indicate that the first terminal or the second terminal agrees to participate in a sensing service; and
the sixth sensing requirement response information is used to indicate that the first terminal or the second terminal refuses to participate in a sensing service.

36. The method according to claim 34, wherein before the sending, by a first network device, first indication information to a first terminal and/or a second terminal, the method further comprises:
receiving first target indication information, wherein the first target indication information comprises at least one of second indication information sent by a second network device, third indication information sent by the second terminal, fourth indication information sent by the first terminal, and fifth indication information sent by an application server, wherein the second indication information comprises at least one of a sensing requirement, second configuration information of the sensing signal, capability information of the second network device, and recommendation configuration information of the second network device, the third indication information comprises at least one of a sensing requirement, third configuration information of the sensing information, capability information of the second terminal, and recommendation configuration information of the second terminal, the fourth indication information comprises at least one of a sensing requirement, fourth configuration information of the sensing information, capability information of the first terminal, and recommendation configuration information of the first terminal, and the fifth indication information comprises a sensing requirement; and
determining the first configuration information according to the first target indication information.

37. The method according to claim 36, wherein the determining the first configuration information according to the first target indication information comprises:
determining the first configuration information by using at least one of the following:
the sensing requirement;
the capability information of the first terminal;
the capability information of the second network device;
the recommendation configuration information of the first terminal;
the recommendation configuration information of the second network device;
the capability information of the second terminal; and
the recommendation configuration information of the second terminal.

38. The method according to claim 34, 36, or 37, further comprising:
determining a terminal associated with the sensing requirement as the target terminal, wherein the target terminal comprises the first terminal and/or the second terminal.

39. The method according to claim 38, wherein after the determining a terminal associated with the sensing requirement as the target terminal, the method further comprises:
obtaining the measurement result sent by the target terminal or a target second network device, wherein the target second network device is a second network device associated with a second sensing requirement; and
determining a target sensing result according to the measurement result.

40. The method according to claim 33, further comprising:
obtaining a target sensing result sent by the first terminal, the second terminal, or a target second network device, wherein the target sensing result is obtained according to the measurement result.

41. The method according to any one of claims 33 to 40, wherein the first terminal and/or the second terminal are/is determined by using at least one of the following:
whether the terminal sends a sensing requirement;
capability-related information reported by the terminal to the first network device;
information that is fed back by the terminal to the first network device and that is about agreeing to or refusing to participate in a sensing service;
information about whether the terminal participates in a sensing service as agreed in advance;
whether the terminal that participates in a sensing service feeds back sensing response information corresponding to a sensing requirement within a specified time;
prior information of the terminal, wherein the prior information of the terminal comprises at least one of a location of the terminal and an area in which the terminal is located; and
information about a base station connected to the terminal.

42. The method according to claim 33, further comprising:
sending the first indication information to a target second network device associated with a sensing requirement.

43. The method according to claim 39 or 42, wherein the target second network device is determined by using at least one of the following:
whether the second network device initiates a second sensing requirement;
information about a terminal connected to the second network device;
capability-related information reported by the second network device to a core network; and
prior information of the second network device, wherein the prior information of the second network device comprises at least one of a location of a base station and an area in which the base station is located.

44. The method according to claim 42, further comprising:
sending the first measurement quantity to the target second network device.

45. The method according to claim 33, further comprising:
sending the first measurement quantity to the first terminal and/or the second terminal.

46. The method according to claim 33, wherein first configuration information of the sensing signal comprises at least one of the following:
a waveform of the sensing signal;
a subcarrier spacing of the sensing signal;
a guard interval of the sensing signal;
a bandwidth of the sensing signal;
burst duration of the sensing signal;
a time domain interval of the sensing signal;
a transmit signal power of the sensing signal;
a signal format of the sensing signal;
a signal direction of the sensing signal;
a time resource of the sensing signal;
a frequency resource of the sensing signal; and
a quasi-co-location QCL relationship of the sensing signal.

47. The method according to claim 33, wherein the first network device comprises a mobile and access management function AMF entity or a sensing function entity.

48. The method according to claim 47, wherein the sensing function entity meets at least one of the following:
managing overall coordination and scheduling of resources required for sensing;
calculating a sensing result and estimating sensing accuracy;
verifying a sensing result and estimating sensing accuracy;
supporting an immediate sensing request;
supporting a delay sensing request;
supporting a periodic or event-triggered sensing request;
supporting cancellation of a periodic or triggering sensing behavior;
corresponding to at least one AMF entity; and
determining a sensing method according to at least one of a type of a sensing client, sensing QoS, a sensing capability of a terminal, and a sensing capability of a network device, wherein the sensing method comprises at least one of the following: sending, by the first network node, the sensing signal, and receiving, by the second network node, the sensing signal; sending and receiving, by the first network node, the sensing signal; sending, by the first network node, the sensing signal, and receiving, by a terminal device associated with the first network node, the sensing signal; sending, by the terminal device, the sensing signal, and receiving, by the second terminal, the sensing signal; sending and receiving, by the terminal device, the sensing signal; and sending, by the terminal device, the sensing signal, and receiving, by the first network node, the sensing signal.

49. A communication sensing method, comprising:
receiving, by a second network device, first indication information, wherein the first indication information is used to instruct a second terminal to send a sensing signal; and/or the first indication information is used to instruct a first terminal to receive a sensing signal, and obtain a measurement result corresponding to a first measurement quantity according to the sensing signal, wherein the first measurement quantity is a measurement quantity related to the sensing signal.

50. The method according to claim 49, wherein the first indication information comprises at least one of the following:
a sensing requirement;
first configuration information of the sensing signal;
capability information of a first network device; and
recommendation configuration information of the first network device.

51. The method according to claim 49, further comprising:
receiving sensing requirement response information sent by the first terminal or the second terminal; and
sending the sensing requirement response information to a first network device, wherein
the sensing requirement response information comprises fifth sensing requirement response information or sixth sensing requirement response information;
the fifth sensing requirement response information is used to indicate that the first terminal or the second terminal agrees to participate in a sensing service; and
the sixth sensing requirement response information is used to indicate that the first terminal or the second terminal refuses to participate in a sensing service.

52. The method according to claim 50, further comprising:
determining second configuration information of the sensing signal according to second target indication information, wherein the second target indication information comprises at least one of the first indication information, third indication information sent by the second terminal, and fourth indication information sent by the first terminal;
the third indication information comprises at least one of a sensing requirement, third configuration information of the sensing signal, capability information of the second terminal, and recommendation configuration information of the second terminal; and
the fourth indication information comprises at least one of a sensing requirement, fourth configuration information of the sensing signal, capability information of the first terminal, and recommendation configuration information of the first terminal.

53. The method according to claim 50, wherein before the determining second configuration information of the sensing signal according to second target indication information, the method further comprises:
receiving at least one of the third indication information and the fourth indication information.

54. The method according to claim 52, wherein the determining second configuration information of the sensing signal according to second target indication information comprises:
determining the second configuration information of the sensing signal according to at least one of the following:
the capability information of the first terminal;
the capability information of the first network device;
the recommendation configuration information of the first terminal;
the recommendation configuration information of the first network device;
the capability information of the second terminal; and
the recommendation configuration information of the second terminal.

55. The method according to claim 54, further comprising:
sending the second configuration information of the sensing signal to at least one of the first terminal, the second terminal, and the first network device.

56. The method according to claim 52, wherein the second configuration information of the sensing signal comprises at least one of the following:
a waveform of the sensing signal;
a subcarrier spacing of the sensing signal;
a guard interval of the sensing signal;
a bandwidth of the sensing signal;
burst duration of the sensing signal;
a time domain interval of the sensing signal;
a transmit signal power of the sensing signal;
a signal format of the sensing signal;
a signal direction of the sensing signal;
a time resource of the sensing signal;
a frequency resource of the sensing signal; and
a quasi-co-location QCL relationship of the sensing signal.

57. The method according to claim 49, wherein before the receiving, by a second network device, first indication information, the method further comprises:
sending second indication information to a first network device, the first terminal, or the second terminal, wherein the second indication information comprises at least one of capability information of the second network device, a sensing requirement, second configuration information of the sensing signal, and recommendation configuration information of the second network.

58. The method according to claim 56, further comprising:
obtaining a target sensing result fed back by the first network device, the first terminal, or the second terminal according to the second indication information, wherein the target sensing result is obtained according to the measurement result.

59. The method according to claim 49, further comprising:
obtaining the measurement result; and
determining a target sensing result according to the measurement result.

60. The method according to claim 59, further comprising:
sending the target sensing result to a first network device, the first terminal, or the second terminal.

61. A communication sensing apparatus, comprising:
a first obtaining module, configured to obtain a sensing signal sent by a second terminal;
and
a second obtaining module, configured to obtain a measurement result corresponding to a first measurement quantity according to the sensing signal, wherein the first measurement quantity is a measurement quantity related to the sensing signal.

62. A communication sensing apparatus, comprising:
a first sending module, configured to send a sensing signal to a first terminal.

63. A communication sensing apparatus, comprising:
a second sending module, configured to send first indication information to a first terminal and/or a second terminal, wherein the first indication information is used to instruct the second terminal to send a sensing signal; and/or the first indication information is used to instruct the first terminal to receive a sensing signal, and obtain a measurement result corresponding to a first measurement quantity according to the sensing signal, wherein the first measurement quantity is a measurement quantity related to the sensing signal, and a target terminal comprises at least one terminal.

64. A communication sensing apparatus, comprising:
a first receiving module, configured to receive first indication information, wherein the first indication information is used to instruct a second terminal to send a sensing signal; and/or the first indication information is used to instruct a first terminal to receive a sensing signal, and obtain a measurement result corresponding to a first measurement quantity according to the sensing signal, wherein the first measurement quantity is a measurement quantity related to the sensing signal.

65. A terminal, comprising a processor, a memory, and a program or an instruction that is stored in the memory and can be run on the processor, wherein the program or the instruction is executed by the processor to implement the steps of the communication sensing method according to any one of claims 1 to 16, or the steps of the communication sensing method according to any one of claims 17 to 32.

66. A network device, comprising a processor, a memory, and a program or an instruction that is stored in the memory and can be run on the processor, wherein the program or the instruction is executed by the processor to implement the steps of the communication sensing method according to any one of claims 33 to 48, or the steps of the communication sensing method according to any one of claims 49 to 60.

67. A readable storage medium, wherein the readable storage medium stores a program or an instruction, and the program or the instruction is executed by a processor to implement the steps of the communication sensing method according to any one of claims 1 to 16, or the steps of the communication sensing method according to any one of claims 17 to 32, or the steps of the communication sensing method according to any one of claims 33 to 48, or the steps of the communication sensing method according to any one of claims 49 to 60.

68. A chip, comprising a processor and a communication interface, wherein the communication interface is coupled to the processor, and the processor is configured to run a program or an instruction to implement the steps of the communication sensing method according to any one of claims 1 to 16, or the steps of the communication sensing method according to any one of claims 17 to 32, or the steps of the communication sensing method according to any one of claims 33 to 48, or the steps of the communication sensing method according to any one of claims 49 to 60.

69. A computer program product, wherein the computer program product is stored in a non-transient storage medium, and the computer program product is executed by at least one processor to implement the steps of the communication sensing method according to any one of claims 1 to 16, or the steps of the communication sensing method according to any one of claims 17 to 32, or the steps of the communication sensing method according to any one of claims 33 to 48, or the steps of the communication sensing method according to any one of claims 49 to 60.

70. A communication device, configured to perform the steps of the communication sensing method according to any one of claims 1 to 16, or the steps of the communication sensing method according to any one of claims 17 to 32, or the steps of the communication sensing method according to any one of claims 33 to 48, or the steps of the communication sensing method according to any one of claims 49 to 60.
